(19) Europäisches Patentamt
European Patent Office
Office européen des brevets

(11) EP 4 667 505 A1

(12) **EUROPEAN PATENT APPLICATION**

(43) Date of publication:
**24.12.2025 Bulletin 2025/52**

(21) Application number: **25183048.5**

(22) Date of filing: **16.06.2025**

(51) International Patent Classification (IPC):
***C08G 59/42*** *(2006.01)* ***C08L 63/00*** *(2006.01)*

(52) Cooperative Patent Classification (CPC):
(C-Sets available)
**C08G 59/42; C08L 63/00** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **17.06.2024 IT 202400013807**

(71) Applicant: **Crossfire S.r.l.**
**48027 Solarolo (Ravenna) (IT)**

(72) Inventor: **CREONTI, Gianluigi**
**48121 RAVENNA (IT)**

(74) Representative: **Dall'Olio, Christian et al**
**INVENTION S.r.l.**
**Via delle Armi, 1**
**40137 Bologna (IT)**

(54) **USO DI ALMENO UN REAGENTE MONOMETRICO E/O OLIGOMERICO, COMPOSIZIONE RETICOLABILE IBRIDA EPOSSIDICA-POLIESTERE, COMPOSIZIONE RETICOLATA IBRIDA EPOSSIDICA-POLIESTERE, E RELATIVO METODO DI PRODUZIONE PANNELLO LAMINATO COMPOSITO PREPREG RETICOLABILE E RELATIVO METODO DI PRODUZIONE, METODO DI PRODUZIONE DI UN OGGETTO IN MATERIALE COMPOSITO RETICOLATO, METODI DI RICICLO DI UN ARTICOLO IN MATERIALE COMPOSITO RETICOLATO, E METODI DI PRODUZIONE DI UN ARTICOLO IN MATERIALE COMPOSITO RETICOLATO**

(57) Use is disclosed of at least a monomeric and/or oligomeric reactant in the production of the epoxy-polyester hybrid crosslinkable composition, an epoxy-polyester hybrid crosslinkable composition, an epoxy-polyester hybrid crosslinked composition, obtainable therefrom by crosslinking and a relative production method, a crosslinkable prepreg composite laminate panel and a relative production method, of recycling methods of an article made of a crosslinked composite material comprising the epoxy-polyester hybrid crosslinked composition, and of the production methods of an article made of a crosslinked composite material.

| | first % of at least crosslinking activation catalyst | Second % of group of crosslinkable components | third % of the least an epoxy resin | fourth % of at least a carboxylated polyester resin | fifth % of the at least a carboxylated polyester resin | sixth % of the least an unsaturated carboxylated polyester resin | Seventh % of at least a monomeric and/or oligomeric reactant | % of the first mixture | % of the second mixture |
|---|---|---|---|---|---|---|---|---|---|
| Comp, 1 | 1 | 99 | 75 | 4 | 4 | 0 | 20 | 0 | 20 |
| Comp, 2 | 2 | 98 | 73 | 5 | 5 | 0 | 20 | 0 | 20 |
| Comp, 3 | 2 | 98 | 73 | 5 | 5 | 0 | 20 | 20 | 0 |
| Comp, 4 | 1 | 99 | 84 | 5 | 5 | 0 | 10 | 10 | 0 |
| Comp, 5 | 3 | 97 | 72 | 5 | 5 | 0 | 20 | 20 | 0 |
| Comp, 6 | 2,5 | 97,5 | 73 | 5 | 5 | 0 | 20 | 20 | 0 |
| Comp, 7 | 2 | 98 | 68 | 10 | 10 | 0 | 20 | 20 | 0 |
| Comp, 8 | 2,5 | 97,5 | 71 | 7 | 2 | 5 | 20 | 20 | 0 |
| Comp, 9 | 2 | 98 | 66 | 12 | 2 | 10 | 20 | 20 | 0 |
| Comp, 10 | 2 | 98 | 66 | 2 | 2 | 0 | 30 | 30 | 0 |
| Comp, 11 | 2 | 98 | 66 | 2 | 2 | 0 | 30 | 0 | 30 |
| Comp, 12 | 1 | 99 | 51 | 28 | 28 | 0 | 20 | 20 | 0 |
| Comp, 13 | 1 | 99 | 51 | 28 | 20 | 8 | 20 | 20 | 0 |
| Comp, 14 | 1 | 99 | 54 | 28 | 15 | 13 | 17 | 17 | 0 |
| Comp, 15 | 1 | 99 | 50 | 29 | 10 | 19 | 20 | 0 | 20 |
| Comp, 16 | 2 | 98 | 63 | 5 | 5 | 0 | 30 | 0 | 30 |
| Comp, 17 | 2 | 98 | 63 | 10 | 5 | 5 | 25 | 10 | 15 |
| Comp, 18 | 2,5 | 97,5 | 73 | 5 | 5 | 0 | 20 | 10 | 10 |
| Comp, 19 | 3 | 97 | 82 | 5 | 5 | 0 | 10 | 5 | 5 |
| Comp, 20 | 2 | 98 | 58 | 20 | 10 | 10 | 20 | 10 | 10 |
| Comp, 21 | 1,5 | 98,5 | 59 | 30 | 20 | 10 | 10 | 0 | 10 |
| Comp, 22 | 1 | 99 | 54 | 30 | 10 | 20 | 15 | 5 | 10 |
| Comp, 23 | 1 | 99 | 89 | 5 | 5 | 0 | 5 | 5 | 0 |

FIG. 3

Table 3



Processed by Luminess, 75001 PARIS (FR)

(Cont. next page)

(52) Cooperative Patent Classification (CPC): (Cont.)

C-Sets
**C08L 63/00, C08L 67/02**

## Description

The present invention relates to the technical sector concerning epoxy-polyester hybrid crosslinkable compositions, to epoxy-polyester hybrid crosslinked compositions and the relative production method, to a crosslinkable prepreg composite laminate panel and a relative production method, to the recycling methods of an article made of a crosslinked composite material, and to the production method of an article made of a crosslinked composite material.

Articles made of crosslinked composite material, for the production thereof, include the use of crosslinkable prepreg composite laminate panels. As is known, these comprise a plurality of reinforcing fibres (often in the form of a reinforcing cloth) and a crosslinkable composition (also known as a crosslinkable or polymerisable resin) which impregnates (or pre-impregnates) the plurality of reinforcing fibres.

To make possible this impregnation, the reinforcing fibres of the plurality are treated, before the weaving thereof, with a primer comprising an agent which increases the wettability thereof (for example with an organosilane compound). To obtain the crosslinkable prepreg composite laminate panel, it is therefore necessary first to impregnate, with the crosslinkable composition, the "primed" plurality of reinforcing fibres. and, following that, to laminate the impregnated plurality of reinforcing fibres. The crosslinkable composition can be of various types, although it is typically epoxy or phenolic, and gives rise, after crosslinking, to a crosslinked composition. It is not possible to perform the overmoulding of a complementary element made of thermoplastic materials on this, as it would not adhere to the crosslinked composition. In the prior art, to fix this complementary element it is necessary to obtain, by crosslinking, an article made of crosslinked composite material having a housing complementary to a portion of the complementary element, and to glue the moulded complementary element thereto separately. Obviously this is particularly laborious and relatively expensive. The reinforcing fibres are generally made of carbon fibre or glass fibre, as well as natural fibres. An article made of crosslinked composite material obtainable by crosslinking the crosslinkable prepreg composite laminate panels of known type, is generally produced by crosslinking, using a pair of the panels among which a known filler element (or "CORE") has been interposed, which is, economically, made of a plastic material having a low specific weight, such as polyester or the like.

The crosslinked composition impregnates the plurality of reinforcing fibres and functions as a glue to determine the fixture between the cited components of the article.

When the crosslinked composition is a crosslinked epoxy resin, which is heat-hardening, the crosslinkable composition comprises an epoxy resin that is crosslinkable of the epoxy polymeric reagents, and a suitable catalyst.

Unfortunately, owing to the nature of the crosslinked composition material, in particular, if epoxy or phenolic, it is not possible to entirely recycle either the articles made of crosslinked composite material, or the crosslinked composite laminate panels obtained by crosslinking the crosslinkable prepreg composite laminate panels of known type. In fact, physical means cannot be used to separate the crosslinked composition from the reinforcing fibres impregnated thereby, nor from the filler element. By turning to solvolysis, in theory it would be possible to dissolve the crosslinked composition, especially if epoxy, in a series of solvents, used in sequence, and separating by distillation the crosslinked composition dissolved in the various solvents therefrom. Unfortunately, this would lead to the use of high quantities of solvents having a dangerous classification. Therefore, the operators would be at high chemical and fire risk. Additionally, consideration must be made of the intrinsic costs of using these solvents. This expense comprises the cost of the solvents and the energy costs for the following distillation and, unfortunately, this is not compensated for by the value of the retrieved components of the article. The reinforcing fibres resistant to high temperatures can be retrieved by subjecting the article made of crosslinked composite material or the laminate panel made of a crosslinked composite material to pyrolysis. This is a process of thermal degradation of the polymeric material in the absence of oxygen, by means of which the organic components of the articles or laminate panels (being the crosslinked compositions) are transformed into primary hydrocarbons. These can be conveyed to the pyrolysis oven to be burned and to supply energy. The reinforcing fibres, or the reinforcing cloth, thus separated, can be reutilised. Using pyrolysis, it is economically possible to recycle only the high-added-value fibres, such as the carbon fibres. Otherwise, the costs of the pyrolysis would not be balanced by the value of the reinforcing fibres. A reinforcing cloth made of textile, which has been recycled by means of pyrolysis, no longer has the relative fibres coated with the primer (which has decomposed), and therefore cannot be further used directly for the production of a laminated panel made of a crosslinkable composite material. In order to be reutilised it must undergo other treatments, such as for example transformation of the textile reinforcing cloth into a non-woven textile cloth (TNT) by means of felting or use thereof in other fields, for example as a sacrificial polishing layer for polishing the surfaces of automobile components, made of carbon fibre in Class A. Note that the use of this recycled textile reinforcing cloth made of carbon fibre does not lead to change in production times and methods of the crosslinkable prepreg laminate panels, or of the corresponding articles article made of a crosslinked composite material, with respect to the use of a reinforcing cloth made of non-recycled carbon fibre.

An alternative re-utilisation of an article made of a crosslinked composite material, in particular when it comprises glass reinforcing fibres, consists in grinding it and mixing it in suitable quantities, as a reinforcing material, with concrete or asphalt.

It is not, however, possible to add, as a reinforcing material, the article made of a ground crosslinked composite

material to a molten crosslinked thermoplastic polymeric material (e.g. PBT, PET, polycarbonate, etc.) so as to realise a product made of composite material comprising the granules. This occurs because the granules obtained become arranged towards the outside of the product in proximity of the surfaces thereof. A non-uniform product would then be generated, having chemical-physical characteristics that are different in different relative portions, compromising use thereof, as the product would have zones that are more fragile.

It is known to paint metallic elements with compositions (or resins) that are epoxy-polyester crosslinkable hybrid compositions in powder form and free of solvents, using the powder-coating technique by spraying the epoxy-polyester crosslinkable hybrid composition in powder form on a heated surface on which they polymerise. Obviously these epoxy-polyester hybrid crosslinkable compositions in powder form comprise epoxy-polyester hybrid crosslinkable polymeric reagents in powder form (i.e. at least a crosslinkable epoxy resin and at least a crosslinked carboxylated polyester resin) and a suitable catalyst that triggers the crosslinking reaction of the composition, which, once crosslinked to form a coating in an epoxy-polyester hybrid crosslinked composition on the surface. The crosslinked coating is not thermoformable as the epoxy-polyester hybrid crosslinked composition is heat-hardening and, heated above the relative glass transition temperature (TG), does not soften but starts to degrade. The epoxy-polyester hybrid crosslinkable compositions (or resins) are in powder form and consist of or comprise:

A) at least an epoxy resin: which is obtainable from the reaction of Bishphenol A (BPA) and epichlorohydrin (EPC); which is crosslinkable; which is in powder form; which has a molecular weight comprised between 600 and 1000 Mw, measurable using gel permeation chromatography; the at least an epoxy resin has an epoxy equivalent weight (EEW), which is measurable using standard Uni ISO 3001;

B) at least an unsaturated carboxylated polyester resin which is obtainable by reaction between a carboxylic acid and a polyol; which is crosslinkable; which is in powder form; which has a value of carboxyl number (acid value or AV), which is typically expressed at mg KOH/gr of unsaturated carboxylated polyester resin (where KOH is potassium hydroxide;

wherein and the percentage of the at least an epoxy resin and the percentage of the at least a carboxylated polyester resin in the known epoxy-polyester hybrid crosslinkable compositions are, among themselves, balanced according to the epoxy equivalent weight (EEW) and the at least an epoxy resin and the number of carboxyls (acid value) of the at least a carboxylated polyester resin.

The known epoxy-polyester hybrid crosslinkable compositions, although in powder form, are commonly identified in the sector of painting as semi-solids. As the above-mentioned known epoxy-polyester hybrid crosslinkable compositions are widely known, the technical expert is perfectly able to balance the relative above-mentioned components alanced according to the epoxy equivalent weight (EEW) of the at least an epoxy resin and the number of carboxyls (acid value) of the at least a carboxylated polyester resin, which is universally expressed as mg KOH/gr of unsaturated carboxylated polyester resin.

Note that standard Uni ISO 3001 specifies a method for the determination of the epox equivalents applicabile to epoxy resins. The indicated standard defines:

i) the epoxy equivalent weight (EEW): mass of resin, in grams, containing a mole of the epoxy group and

ii) the epoxy index (EI): the number of moles of the epoxy groups contained in 1 kg of resin.

The epoxy equivalent weight (EEW) is measurable using standard Uni ISO 3001. In this case too, the supplier of the epoxy resin indicates the relative epoxy equivalent weight (EEW) in the relative technical chart, so the expert in the sector bases themself on the datum indicated by the supplier and has no need to measure the epoxy equivalent weight (EEW) using standard Uni ISO 3001, For a wider explanation known in the literature, it is considered that the reaction between epoxy resin and carboxylated polyester resin always takes place with a 1:1 ratio. In other words, an epoxy group of the at least an epoxy resin react with a carboxyl group of the at least an unsaturated carboxylated polyester resin. Therefore, given the value of EEW of the epoxy resin in gr/eq, given the value of the number of carboxyls (AV), expressed as mg KOH/gr of unsaturated carboxylated polyester resin, given that the equivalent weight of the KOH is of equivalent weight of KOH = 56100 mg/eq; the percentage of the of the at least an unsaturated carboxylated polyester resin (%RPCI) will be given by the following formula:

$$\%RPC = (56100/(56100 + AV * EEW) *100$$

Consequently, the percentage of the at least an epoxy resin (%RE) will be given by the following formula:

$$\%RE = 100 - \% RPCI$$

Note that the expert in the sector is perfectly able to measure the glass transition temperature (TG) since it is measurable using differential scanning calorimetry according to standard ISO 1356, at present applicable. In the following, each time mention is made of the glass transition temperature (TG) or, simply, the term TG is used to refer to it, it is meant that it can be measured using differential scanning calorimetry according to standard ISO 1356, in particular Standard ISO 1356, at present in standard use.

In practice, a sample of a few grams of the epoxy-polyester hybrid crosslinked composition to be tested is dried and placed in a casting dish parallel to a casting dish that is identical but empty (used as reference); the sample is heated up to a predefined temperature then cooled at a velocity of both heating and cooling that is constant and predefined. The flow of heat generated by the sample is monitored and compared to that of the reference dish. The curve obtained is able to place in evidence the glass transition temperature beyond that of fusion and crystallisation. The glass transition temperature represents the passage temperature of the sample from the amorphous state to the crystalline state.

Note that, notwithstanding the fact that the technical expert is perfectly able to measure the molecular weight of the epoxy resin by using gel permeation chromatography, or GPC from the term "Gel Permeation Cromatography ", usually the expert uses the molecular weight indicated by the supplier of the epoxy resin, typically in a technical chart or a certificate of analysis, as it is a material that has been widely known for some time and is available on the market. In fact, according to the invention, neither synthesis of the epoxy resin nor the measurement of the relative molecular weight is required, but only to source the resin on the market, where it is has been present for a long time. It is well known to the expert in the sector that when an epoxy resin is in liquid form, it has a low molecular weight of less than 500 Mw, and when it is integral it has a molecular weight of higher than 600 Mw.

The melting point of the solid epoxy resin increases with the growth of the molecular weight thereof.

However, it is possible to carry out an analysis of the molecular weight of the epoxy resin by using gel permeation chromatography. This chromatography is able to elute in different timings the molecules in solution on the basis of the dimensions thereof, and is typically used for analysing the polymers and determining the distribution of the molecular weight. The larger molecules are excluded by the pore in the stationary step and elute more rapidly, while the smaller molecules penetrate into the pore and elute later on.

As an example of one of the many methodologies known to the expert in the sector for measuring the molecular weight of the epoxy resin, the following is described.

The sample solution of epoxy resin is prepared on the basis of the expected molecular weight (600-1000 MW for solid epoxy resins) for which reason, as widely advised in the literature, 3-5 mg/mL of epoxy resin are diluted in tetrahydrofuran, with the slow shake technique for 30 minutes; after which it is filtered to separate any particles that have remained undissolved. The gel permeation chromatography column, with polystyrene gel on methacrylate (having dimensions of 300x75 mm) is stabilised at a temperature of 35-40°C. For a better definition of the result a sequence of 3 gel permeation chromatography columns can be used.

A sample of 200 μl is injected and eluted using tetrahydrofuran at a velocity of 1mL/min and continuous analysis of the eluate with a Refractory Index Detector will provide a graph (in which the response intensity of the detector is given in the Y axis and the retention time is given in the X axis).

To assign a molecular weight to each retention time interval for the eluate sample, it is necessary to calibrate the analysis system, or more specifically, the set of columns. There exist various ways for carrying out this operation, but the simplest consists in using a relative calibration based on a series of polymeric standards that are well characterised with a distribution of the molecular weight as narrow as possible. It would be ideal to use a series of monodispersed standards, i.e. the single molecular weight, with the weight ratio and the mean numerical ratio (dispersity) of one (Mw/Mn = 1). It is possible to use various types of standard, for example EasiCal, by Agilent Technologies.

By way of information on gel permeation chromatography reference is made to the publication of Jean Lane titled "Practical Steps inGPC MethodDevelopment"- Applications Engineer LC Columns & Consumables Technical Support, March 23, 2016

The epoxy groups in a fraction of crosslinkable composition, dissolved in anhydrous acetic acid, react with HBr, generated in situ from a solution of perchloric acid with tetraethylammonium bromide. The standard solution is used as an indicator of crystal violet.

Obviously, the abbreviation Mw is taken to mean the weight average molecular weight. The technical expert in the sector is perfectly able to establish the number of carboxyls (acid values of a carboxylated polyester resin). However the companies that produce them also provide the relative indication of the number of carboxyls. Further, the technical expert in the sector is able to balance an epoxy carboxylated polyester resin. balanced according to the epoxy equivalent weight (EEW) of the at least an epoxy resin and the carboxyl number (acid value) of the at least a carboxylated polyester resin.

It is known that bis(2-hydroxyethyl) terephthalate (also known as BHET) having CAS number 959-26-2) is an intermediate used in the production of polyethylene terephthalate (PET). This is obtained by the reaction of the terephthalic acid with 1,2-ethanediol and the PET is subsequently crosslinked.

In the recycling process of the PET, the BHET can be obtained on an industrial scale by means of glycolysis of the PET by reaction with ethylene glycol (EG) and a suitable catalyst, elimination of the glycol and successive filtration in the molten state to eliminate impurities. As can be observed in figure 1, from the glycolysis of the PET it is also possible to a depolymerisation mixture, comprising BHET, oligomers of BHET and glycols, in particular ethylene glycol, diethylene glycol (DEG) and triethylene glycol (TEG). From the depolymerisation mixture, by elimination of the ethylene glycol a depolymerisation mixture is obtained that is free of the glycols, comprising only BHET and oligomers of BHET. The oligomers typically comprise up to a maximum of 10 monomeric units. It is possible to separate the BHET from the depolymerisation mixture free of the glycols obtaining a remaining mixture of oligomers of the BHET, to use the mixture of oligomers of the BHET separated from the BHET given that the oligomers present therein have levels of reactivity that are clearly higher than the BHET. Therefore 3 possible uses of the products obtained by the depolymerisation of the PET polymer will be discussed, i.e:

a) using only the separated BHET;

b) using only the mixture of oligomers of the BHET;

c) using the depolymerisation mixture free of glycols comprising both BHET and the oligomers thereof.

Note that the BHET is in equilibrium with the dimer thereof. The mixture of BHET oligomers is particularly rich in dimer and linear trimer of the BHET which can be separated using known means but as they are reutilised together in the glycolysis, this is not generally done.

WO2018031103 describes a polymerisable epoxy composition comprising: at least an epoxy compound; at least a polymerising agent based on a phosphorus-containing aromatic polyester; and at least a co-crosslinking agent with a constant dielectric of less than 4.0, or at least a co-crosslinking agent which enables the polymerised epoxy composition to have a constant dielectric of less than 4.0 and wherein the co-crosslinking agent is different to the polymerising agent; and, an article comprising the polymerising agent and a manufacturing process of a laminate.

CN105968730 describes a material having a utilisable low melting point preferably the formation of cores and a die core low melting point. The low-point material for the formation of cores satisfies the following conditions: it is a hard solid below 20 °C; the glass transition temperature is higher than 20°C; and it forms a flowing liquid with a viscosity of lower than 200 Pa.s when the temperature is lower than 180°C.

CN105733193 describes a preparation method of a composite material based on epoxy resin with controllable tenacity. The method comprises specific steps of: mixing the epoxy resin and the thermoplastic resin powder under conditions of heating to obtain a matrix of epoxy resin; cooling the matrix of epoxy resin: adding a hardening agent and mixing in order to obtain an epoxy resin system; preparing an adhesive film of epoxy resin from the epoxy resin system while controlling the film coating temperature at 80-90°C and the density of the surface of the adhesive film at 25-65 g/m$^2$; composing the adhesive film with epoxy resin and the carbon fibre in conditions of heating-pressurising in such a way as to prepare a prepreg in carbon fibre to melt at heat; composing the prepreg in carbon fibre to melt at heat and the surface felt in polyester so as to compress it at heat, where the hot compression temperature is 80-90° C; layering the prepreg composite to be melted at heat and carrying out the moulding by polymerisation on the layered prepreg in order to obtain the composite material based on epoxy resin.

US2023067221A1 discloses a process for the purification of bis(2-hydroxyethyl) terephthalate (BHET) obtained from the depolymerisation of a waste polyethylene terephthalate (PET), the process comprises: the treatment of the solution with at least an oxidising agent at a temperature comprised between 30 °C and 100 °C to obtain an oxidised solution; treatment of the oxidised solution with at least an adsorbent element to obtain a purified oxidised solution; the separation of the at least an adsorbent element from the purified oxidised solution to obtain a purified BHET solution. This process is particularly effective in eliminating the organic colorants and other organic contaminants having a low molecular weight, so as to obtain an elevated grade of purity of the BHET.

There emerges a need to be able to more substantially recycle an article made of a crosslinked composite material obtained by crosslinking at least a crosslinkable prepreg composite laminate panel, preferably by entirely reutilising it.

The object of the present invention is to provide an article made of crosslinked composite material that is recyclable, in particular of a composite object made of a crosslinked composite material and also having a hollow body, being a waterborne vessel (windsurfing and kitesurfing boards, canoes, kayaks, Flyboards for Hydrojets, hulls, for example for inflatable watercraft, and jet-skis, etc. or a wind turbine blade), and production means and recycling methods thereof.

A further aim of the present invention is to make available an article made of a recyclable crosslinked composite material that is producible at an industrial scale the production of which does not require large use of labour, long production times, and which has a modest cost in comparison with the objectives that are to be sought.

The aims of the present invention also relate to obtaining an article made of a crosslinked composite material comprising a complementary element made of a thermoplastic material in a simple and economical way.

A further object of the present invention is to provide an article made of crosslinked composite material that is recyclable, by using epoxy-polyester hybrid crosslinkable polymeric reagents, i.e. at least a carboxylated polyester resin and at least an epoxy resin.

The stated aim and objective are resolved according to the objects of the independent claims appended to the present description.

The epoxy-polyester hybrid crosslinkable composition according to claim 1, by virtue of the presence of the at least a monomeric and/or oligomeric reactant and of the crosslinking temperature used, by crosslinking is transformed into the epoxy-polyester hybrid crosslinked composition according to claim 5. The novel epoxy-polyester hybrid crosslinked composition, when placed at a temperature that is higher than the relative single glass transition temperature (TG) (which is measurable using differential scanning calorimetry according to standard ISO 1356), is thermoformable and therefore is modellable and therefore can be recycled. Further, the relative viscosity, once molten, falls as the temperature rises. The epoxy-polyester hybrid crosslinked composition has, therefore, a relative softening temperature that is greater than the glass transition temperature and, above this, exhibits a thermoplastic behaviour (as will be demonstrated (11) in the following with reference to figures 5B and 5C). It follows that it can be easily remodelled at heat to be reutilised without degrading. The crosslinkable prepreg composite laminate panel according to the invention, in which the relative reinforcing fibres are impregnated with a solid epoxy-polyester hybrid crosslinkable composition that is solid but not in powder form (otherwise it might not impregnate the reinforcing fibres), enables obtaining the article made of a crosslinked composite material according to the invention which comprises the epoxy-polyester hybrid crosslinked composition. The article is easily and economically recyclable by the simple, rapid and economical recycling methods claimed. It is noted that these methods do not involve costly processes in terms of energy consumption, nor do they lead to the use of dangerous solvents and for this reason do not lead to particular chemical or fire risks. Note that the recycling method according to claim 20 enables obtaining a thermoformable mixture that, once heat-formed, gives rise to a further article made of a crosslinked composite material with the plurality of reinforcing fibres. These reinforcing fibres, by effect of the grinding into granules of the first article made of crosslinked composite material to be recycled, are preferentially not arranged along the surfaces of the further article. In fact, they are almost uniformly distributed in the further article made of a crosslinked composite material, which therefore is suitable to be put up for sale. This is true even when the article has been obtained by extrusion. The further article, therefore, has chemical-physical characteristics that are practically uniform and has an excellent external appearance with a high and homogeneous mechanical resistance. The further article preferably comprises less than 40% of reinforcing fibres deriving from the first article and, preferably, less than 30%.

The applicant has verified that if the epoxy-polyester hybrid crosslinkable composition is crosslinked using a reaction temperature of lower than 130°C, an epoxy-polyester hybrid crosslinked composition is obtained that has two single glass transition temperatures (TG) (which are measurable using differential scanning calorimetry according to standard ISO 1356), and which therefore comprises two different polymers, and which is never thermoformable. The two different polymers can, for example, constitute two interconnected polymers or a block polymer. The applicant hypothesises that the epoxy-polyester hybrid crosslinked composition according to the invention differs from the known hybrid epoxy-polyester crosslinked compositions (which are at present used to carry out the Powder Coating) owing to the fact of possessing polyester type lateral chains which would give the epoxy-polyester hybrid crosslinked composition of the invention the special thermoplastic behaviour above the relative glass transition temperature.

The terms "monomeric and/or oligomeric reactant" are taken to mean a reactant that can react to form polymers.

The term BHET is an abbreviation taken to indicate the bis(2-hydroxyethyl) benzene-1,4-dicarboxylate.

The article made of a crosslinked composite material is also definable as a "crosslinked prereg composite material" as it is obtainable from the crosslinking of a crosslinkable prepreg composite laminate panel.

Specific embodiments of the invention will be described in the following part of the present description, according to what is set down in the claims and with the aid of the accompanying tables of drawings, in which figures 1-2 are relative to the prior art, and figure 1 is a depolymerisation diagram by glycolysis of the PET and figure 2 illustrates the chemical formula of the linear trimer of the BHET.

Figure 3 includes a table relative to some specific preferred epoxy-polyester hybrid crosslinkable compositions according to the invention.

Figure 4A is a graph relating to the differential scanning calorimetry (DSC) of the BHET, and of a first and a second embodiment of the crosslinkable composition according to the invention (i.e. Comp. 1 and Comp.2 of Table 3 of figure 3) while they crosslink.

Figure 4B is a larger-scale view of detail K of figure 2A.

Figures 5A, 5B, and 5C illustrate the graphs obtained by dielectric ionic analysis DEA (or Netzsch's Ionic Dielectric Analysis) relative, respectively, to an epoxy crosslinkable composition of known type (FIG. 5A), to the second embodiment of the crosslinkable composition according to the invention (Comp. 2) isothermal at 160 °C (Fig. 5B) and isothermal at 180 °C (Fig. 5C).

Figure 6 is a schematic view in section of a die for composite articles according to the present invention.
Figures 7 and 8 are schematic views of, respectively, a first and a second embodiment of a crosslinkable prepreg composite laminate panel according to the invention.
Figure 9 is a partial schematic view in section of a die for realising composite articles.
Figures 10 - 13 are views, partial and in section, of two composite articles according to the Invention, formed as half-shells.
Figure 14 is a view, partial and in section, of two composite articles according to the Invention, formed as half-shells and of a welding device comprising the crosslinkable composition according to the Invention.
Figure 15 is a view, partial and in section, of a composite article according to the Invention.
In some cases, in the figures in section view, backgrounds have been omitted for the sake of clarity.
The epoxy-polyester hybrid crosslinkable composition of the invention is solid at ambient temperature; is in powder form (preferably in micronized powder form and having pores of dimensions that are equal to or smaller than 100μm), and consists of:

- at least a crosslinking activation catalyst; which has a crosslinking activation temperature: and which is in powder form: 2-methylimidazole; imidazole, 2-phenylimidazole, benzylimidazole; and their relative mixtures; which has a first percentage, calculated in weight/weight on the total of the epoxy-polyester hybrid crosslinkable composition, wherein the first percentage is comprised between 0.5% and 10%; (and which, progressively more preferably, is comprised between 0.1% e 8.0%, between 0.5% and 5%, between 1.0% and 3.0% and between 2.0% and 3.0%);

- a group of crosslinkable components, which has a second percentage, calculated in weight/weight on the total of the epoxy-polyester hybrid crosslinkable composition; wherein the second percentage is comprised between 90.0% and 99.5% (preferably between 93 and 99, more preferably between 94 and 96, and advantageously 94.5%), and wherein the group of components is constituted by:

  A) at least an epoxy resin: which is obtainable from the reaction of Bishphenol A (BPA) and epichlorohydrin (EPC); which is crosslinkable; which is in powder form; which has a molecular weight comprised between 600 and 1000 Mw, measurable using gel permeation chromatography; wherein the at least an epoxy resin has an epoxy equivalent weight (EEW), which is measurable using standard Uni ISO 3001; wherein the at least an epoxy resin has a third percentage (%3), calculated in weight/weight with respect to the epoxy-polyester hybrid crosslinkable composition;

  B) at least a carboxylated polyester resin (which is of known type): which is obtainable by reaction between a carboxylic acid and a polyol; which is crosslinkable; which is in powder form; which has a value of carboxyl number (AV) (also known as "acid value") expressed as mg KOH/gr of unsaturated carboxylated polyester resin (where KOH is potassium hydroxide; wherein the at least a carboxylated polyester resin is in a fourth percentage (%4), calculated in weight/weight with respect to the epoxy-polyester hybrid crosslinkable composition; and which comprises (and is preferably constituted by):

    B1) at least an unsaturated carboxylated polyester resin (which is of known type); which is obtained by reaction between a carboxylic acid and a polyol; which is crosslinkable; which is in powder form; and which has a fifth percentage, calculated in weight/weight with respect to the epoxy-polyester hybrid crosslinkable composition;

    B2) optionally, at least a thermoplastic polyester: which is in powder form; and which has a sixth percentage, calculated in weight/weight with respect to the epoxy-polyester hybrid crosslinkable composition;

    wherein the third percentage (%3) of the at least an epoxy resin and the fourth percentage (%4) of the at least a carboxylated polyester resin are, between them, balanced according to the epoxy equivalent weight (also known as EEW) of the at least an epoxy resin and the number of carboxyls (acid value) of the at least a carboxylated polyester resin;

  C) at least a monomeric and/or oligomeric reactant: which is in powder form; which is crosslinkable in polyethylene terephthalate (PET); which is in a seventh percentage, calculated in weight/weight with respect to the epoxy-polyester hybrid crosslinkable composition, which is comprised between 5% and 45%;

  wherein the ratio between the third percentage (%3) of the at least an epoxy resin and the sum of the fourth percentage (%4) of the at least a carboxylated polyester resin and of the seventh percentage of the monomeric and/or oligomeric reactant: is comprised between 1 and 19 (i.e. between 50/50 and 95/5);

and wherein the sum of the third percentage (%3) of the at least an epoxy resin and of the fourth percentage (%4) of the at least a carboxylated polyester resin, is comprised between 50% and 95% and, preferably, is comprised between 45% and 90%; wherein the at least a monomeric and/or oligomeric reactant is selected from a group consisting of:

C1) a first mixture: which is a monomeric and oligomeric mixture of depolymerisation of the polyethylene terephthalate (PET), which is free of glycols, which is obtainable from a depolymerisation mixture, by means of glycolysis, of the polyethylene terephthalate (PET);

C2) a second mixture which comprises and which is preferably constituted by:

- a linear dimer of (2-hydroxyethyl) benzene-1,4-dicarboxylate having a chemical formula as follows:

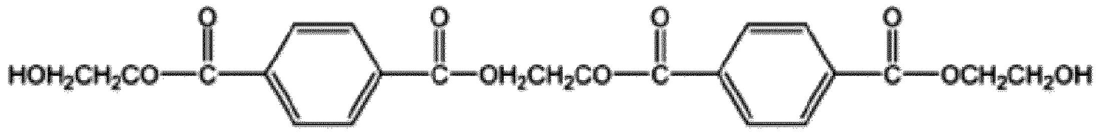

; and

- a linear trimer of (2-hydroxyethyl) benzene-1,4-dicarboxylate having a chemical formula as follows:

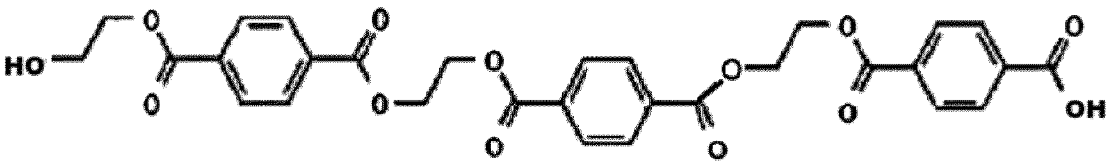

C3) the linear dimer of (2-hydroxyethyl) benzene-1,4-dicarboxylate;

C4) the linear trimer of (2-hydroxyethyl) benzene-1,4-dicarboxylate;

C5) bis(2-hydroxyethyl) benzene-1,4-dicarboxylate (BHET);

and their relative mixtures, wherein:

- the epoxy-polyester hybrid crosslinkable composition is obtainable (and preferably obtained) only by mixing of: the at least an epoxy resin; the at least a carboxylated polyester resin; the at least a monomeric and/or oligomeric reactant; the at least a crosslinking activation catalyst; and

  wherein the epoxy-polyester hybrid crosslinkable composition, following only heating thereof to a crosslinking temperature: which is equal to or higher than the crosslinking activation temperature of the at least a crosslinking activation catalyst; and which is comprised between 130°C and 250°C (preferably between 135 C° and 210 °C, more preferably between 170°C and 200°C, advantageously between 170 C° and 190 °C, at 180 °C) is crosslinkable in an epoxy-polyester hybrid crosslinked composition: which has a single glass transition temperature (TG) (which is measurable using differential scanning calorimetry according to standard ISO 1356); and which is thermoformable to a temperature of higher than the further single glass transition temperature (TG).

We stress the concept that the at least an epoxy resin is solid and known and has a molecular weight of above 600 Mw and below 1000 Mw and is available on the market, as there is no point in the expert in the sector measuring the molecular weight, although this would be possible using gel chromatography.

Obviously, the fact that the third percentage (%3) of the at least an epoxy resin and the fourth percentage (%4) of the at least a carboxylated polyester resin are, between them, balanced according to the epoxy equivalent weight, in the light of what is discussed in relation to the prior art means, that considering a group of resins constituted only by: by the at least an epoxy resin and the at least a carboxylated polyester resin; the percentage of the of the at least a carboxylated polyester resin (%RPC) calculated in weight/weight with respect to the total weight of the group of resins will be given by a formula as follows:

$$\%RPC = 56100/(56100 + AV * EEW) *100$$

and the percentage of the at least an epoxy resin (%RE), calculated in weight/weight with respect to the total weight of the group of resins will be given by a formula as follows:

$$\%RE = 100 - \% RPC$$

and that the ratio between the third percentage (%3) of the at least an epoxy resin divided by the fourth percentage (%4) of the at least a carboxylated polyester resin is equal to the ratio between the above-mentioned percentage of the at least a carboxylated polyester resin (%RPC) divided by the above-mentioned percentage of the at least an epoxy resin (%RE), i.e:

**(%3)/(%4) = %RE/%RPC = (100 - (56100/(56100 + AV * EEW) * 100)/(56100/(56100 + AV * EEW) * 100.**

The applicant has established that by crosslinking the epoxy-polyester hybrid crosslinkable composition according to the invention to a temperature of lower than 130 °C a single epoxy-polyester hybrid crosslinked composition polymer having a single TG is not obtained, but rather a composite material that has two distinct TGs and which can be constituted by two interconnected polymers or by a block polymer. Table 3 of figure 3 includes various embodiments of the epoxy-polyester hybrid crosslinkable composition according to the Invention wherein the at least a crosslinking activation catalyst is 2-methylimidazole. By way of example, some of the glass transition temperatures (TG) are included (which have been measured using differential scanning calorimetry according to standard ISO 1356), of some compositions of table 3:

- Comp. 1 has a relative glass transition temperature (TG) of 113°C;
- Comp. 2 has a relative glass transition temperature (TG) of 116°C;
- Comp. 3 has a relative glass transition temperature (TG) of 120°C; and
- Comp. 4 has a relative glass transition temperature (TG) of 117°C.

Note that when subjected to heating, the BHET reacts to give the linear dimer of the (2-hydroxyethyl) benzene-1,4-dicarboxylate and the linear trimer of (2-hydroxyethyl) benzene-1,4-dicarboxylate.

The at least an unsaturated carboxylated polyester resin is preferably obtained by reaction between adipic acid and a polyol and, more preferably, has undergone a subsequent dehydrogenation.

The second mixture can be obtainable from the first mixture by suitable separation of the linear dimer of (2-hydroxyethyl) benzene-1,4-dicarboxylate and of the linear trimer of (2-hydroxyethyl) benzene-1,4-dicarboxylate.

The first depolymerisation mixture of the PET free of glycols can comprise (2-hydroxyethyl) benzene-1,4-dicarboxylate (BHET) and oligomers of (2-hydroxyethyl) benzene-1,4-dicarboxylate having a maximum 10 monometric units.

Obviously, in the at least a monomeric and/or oligomeric reactant: the BHET and the linear dimer thereof are in equilibrium.

The epoxy-polyester hybrid crosslinked composition is crosslinked, i.e. heat-hardened, with definitive bonds (thermoset). Nothwithstanding the above, when heated beyond the TG (which is measurable using differential scanning calorimetry according to standard ISO 1356) it has a thermoplastic behaviour, but does not melt before degrading.

Preferably, in the epoxy-polyester hybrid crosslinkable composition according to the invention, the at least a carboxylated polyester resin comprises the at least a thermoplastic polyester.

The seventh percentage of the at least a monomeric and/or oligomeric reactant is preferably comprised between 5% and 40%. The seventh percentage is progressively preferably equal to or higher than 6%, 8%, 10%, 15%, 20%, 25%, 30%, 35%, 40%, since with the increase of the seventh percentage of the at least a monomeric reagent the thermoplastic behaviour of the corresponding epoxy-polyester hybrid crosslinked composition increases and the relative glass transition temperature increases. Further, as the seventh percentage increases, the viscosity of the epoxy-polyester hybrid crosslinkable composition, when molten, diminishes and this is particularly advantageous as it enables more effective impregnation of the reinforcing fibres, by minimising the empty spaces in the article (1) made of a crosslinked composite material according to the Invention. In this way the mechanical resistance thereof is increased. In particular, especially preferred is an epoxy-polyester hybrid crosslinkable composition according to the invention, in which the seventh percentage of the at least a monomeric and/or oligomeric reactant is equal to or above 30%, as it is crosslinkable in an epoxy-polyester hybrid crosslinked composition, according to the Invention, which has a relative glass transition temperature (TG) of greater than 130°C (measurable using differential scanning calorimetry according to standard ISO

1356), and which is therefore also usable in the aerospace sector. In fact, in that industry a TG of greater than 130 °C is required. Further, the articles that comprise the epoxy-polyester hybrid crosslinked composition can be recycled at higher temperatures as they have greater thermoplastic behaviour.

Particularly advantageous is an epoxy-polyester hybrid crosslinkable composition in which the at least a monomeric and/or oligomeric reactant is the first mixture or the second mixture, preferably the first mixture.

The ratio between the third percentage (%3) of the at least an epoxy resin and at least a carboxylated polyester resin in the group of crosslinkable components is preferably comprised between 3:7 and 3.1 and preferably is comprised between 2.5:7.5 and 6,5:7.5 and advantageously is 1:1.

With the aim of enabling greater personalisation of the epoxy-polyester hybrid crosslinked composition according to the Invention also an additivated epoxy-polyester hybrid crosslinkable composition according to the invention is preferred, which consists in:

- an epoxy-polyester hybrid crosslinkable composition according to any one of claims 1-3, in an eighth percentage calculated in weight/weight with respect to the additivated epoxy-polyester hybrid crosslinkable composition; wherein the eighth percentage is comprised between 70% and 99.9%, preferably between 80% and 98% and more preferably between 90% and 98%; and

- a component which is selected from a group of components consisting of: at least an additive, at least a colorant, at least a filler and at least a flame retardant, and relative mixtures thereof; wherein the component has a ninth percentage, calculated in weight/weight with respect to the additivated epoxy-polyester hybrid crosslinkable composition, wherein the ninth percentage is comprised between 0.1% and 30%, preferably between 2% and 20% and more preferably between 2% and 10%.

In a like way to the epoxy-polyester hybrid crosslinkable composition according to the invention, also the additivated epoxy-polyester hybrid crosslinkable composition, after only mixing and subsequent heating thereof, to a crosslinking temperature: which is equal to or higher than the crosslinking activation temperature of the at least a crosslinking activation catalyst comprised in the epoxy-polyester hybrid crosslinkable composition; and which is comprised between 130°C and 250°C (preferably between 135 C° and 210 °C, more preferably between 170°C and 200°C, advantageously between 170 C° and 190 °C, at 180 °C), is crosslinkable in a further epoxy-polyester hybrid crosslinked composition: which has a further single glass transition temperature (TG) (which is measurable using differential scanning calorimetry according to standard ISO 1356); and which is thermoformable to a temperature of higher than the further single glass transition temperature (TG).

The epoxy-polyester hybrid crosslinked composition according to the invention is obtainable by crosslinking, at a crosslinking temperature comprised between 130°C and 250°C, a crosslinkable composition selected from a group consisting of: an epoxy-polyester hybrid crosslinkable composition according to any one of claims according to the Invention; and an additivated epoxy-polyester hybrid crosslinkable composition according to the Invention. This epoxy-polyester crosslinked composition is characterised in that it has a single glass transition temperature (TG), and in that, when it is at a temperature that is higher than the single glass transition temperature (TG), it is advantageously thermoformable. This enables it to be recyclable.

Obviously, the above-mentioned crosslinking temperature will be the same as or greater than the crosslinking activation temperature of the at least a crosslinking activation catalyst contained in the crosslinkable composition.

The epoxy-polyester hybrid crosslinked composition according to the invention, has, once molten, a viscosity that falls as the temperature increases.

It is progressively preferable that the epoxy-polyester hybrid crosslinked composition has a relative glass transition temperature equal to or higher than 110 °C, 115 °C, 120 °C, 125°C, or 130 °C. For example in the automobile sector, requirement is for articles made of a crosslinked composite material having TG of greater than 100 -110 °C. These can be measured using differential scanning calorimetry according to standard ISO 1356.

The proposed production method of an epoxy-polyester crosslinked composition according to the invention comprises steps as follow:

- predisposing a crosslinkable composition selected from a group consisting of: an epoxy-polyester hybrid crosslinkable composition according to the invention, and an additivated epoxy-polyester hybrid crosslinkable composition according to the invention;

heating the crosslinkable composition predisposed in the preceding step to a crosslinking temperature: which is equal to or higher than the crosslinking activation temperature of the at least a crosslinking activation catalyst contained in the crosslinkable composition predisposed in the preceding step; wherein the crosslinking temperature comprised between 130°C and 250°C (preferably between 135 C° and 210 °C, more preferably between 170°C and 200°C, and

advantageously between 170 C° and 190 °C, at 180 °C), obtaining a liquid crosslinkable composition which crosslinks to produce the epoxy-polyester hybrid crosslinked composition. According to the invention, in this production method of a epoxy-polyester crosslinked composition according to the Invention, the predisposing step of the crosslinkable composition comprises and, preferably, consists in mixing the relative components while the relative components are in powder form.

The invention also relates to the use of at least a monomeric and/or oligomeric reactant in production of an epoxy-polyester hybrid crosslinkable composition, wherein the monomeric and/or oligomeric reactant: is in powder form; is crosslinkable in thermoplastic polyethylene terephthalate (PET); is in a percentage comprised between 5% and 45%, preferably between 55% and 30% calculated in weight/weight with respect to the epoxy-polyester hybrid crosslinkable composition; and is selected from a group consisting of:

C1) a first mixture: which is a monomeric and oligomeric mixture of depolymerisation of the polyethylene terephthalate (PET), which is free of glycols, which is obtainable from a depolymerisation mixture, by means of glycolysis of the polyethylene terephthalate (PET);

C2) a second mixture which comprises:

a linear dimer of (2-hydroxyethyl) benzene-1,4-dicarboxylate having a chemical formula as follows:

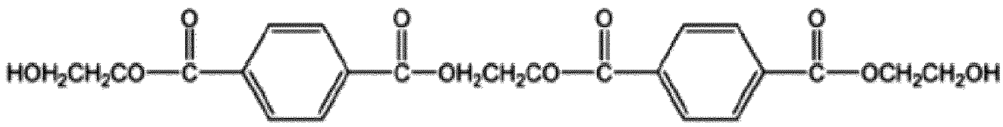

; and

a linear trimer of (2-hydroxyethyl) benzene-1,4-dicarboxylate having a chemical formula as follows:

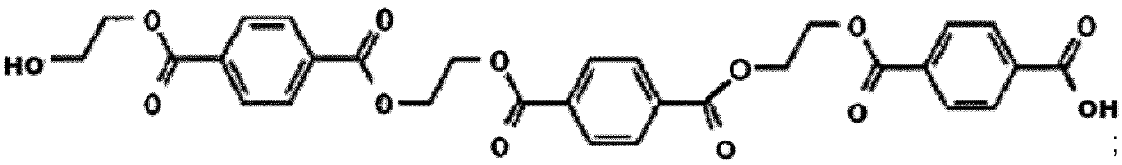

;

C3) the linear dimer of (2-hydroxyethyl) benzene-1,4-dicarboxylate;

C4) the linear trimer of (2-hydroxyethyl) benzene-1,4-dicarboxylate;

C5) bis(2-hydroxyethyl) benzene-1,4-dicarboxylate (BHET); and mixtures thereof.

With reference to figure 3 note that it is possible to replace, in the specific compositions reported, the first mixture and the second mixture with BHET or vice versa. Also, it is possible to replace the BHET with the linear dimer of the BHET or the linear trimer of the BHET in the compositions in the place of the BHET. With reference to figures 4A and 4B these figures are relative to the differential scanning calorimetry (DSC) of the BHET, and of a first and a second embodiment of the epoxy-polyester hybrid crosslinkable composition according to the Invention (i.e. Comp. 1 and Comp.2 of Table 3 of figure 3A) while they crosslink.

In an embodiment of the use of at least a monomeric and/or oligomeric reactant in production of an epoxy-polyester hybrid crosslinkable composition according to the invention, the mixing of the reaction reagents in powder form, for the production of an epoxy-polyester hybrid crosslinkable composition, takes place in powder form, the crosslinking reaction takes place at a temperature comprised between 130°C and 250°C.

Preferably, in the use and in the production method of an epoxy-polyester crosslinked composition according to the invention, the temperature is comprised between 135 °C, 250 °C, 140 °C, 250°C, more preferably between 160°C and 180°C and advantageously it is 170 °C - 180 °C.

Note that the DSC illustrate that both Comp. 1 and Comp. 2 have a single glass transition temperature (TG), measured using differential scanning calorimetry according to standard ISO 1356. Further, the applicant has verified that, according to the invention and all other factors being equal, the glass transition temperature increases with the increasing of the seventh percentage (in weight/weight) of the at least a monomeric and/or oligomeric reactant. Further, the applicant

has verified that, according to the invention and all other factors being equal, the glass transition temperature increases with the increasing of the first percentage of the crosslinking activation catalyst.

In this regard, it is known that the DSCs of the epoxy-polyester hybrid crosslinkable compositions of known type, carried out while crosslinking, evidence two glass transition temperatures (TG) (measured using differential scanning calorimetry according to standard ISO 1356), as the crosslinked compositions of known type which derive are only random epoxy-polyester copolymers.

On the contrary, the epoxy-polyester hybrid crosslinkable composition according to the invention, by virtue of the presence of the at least a monomeric and/or oligomeric reactant and of the reaction temperature used, gives rise to an epoxy-polyester hybrid crosslinked composition which is not a copolymer but is a polymer having a single TG. It is measurable using differential scanning calorimetry according to standard ISO 1356. The at least a monomeric and/or oligomeric reactant preferably comprises (and preferably consists of) BHET.

This, being equal to the seventh percentage of the at least a monomeric and/or oligomeric reactant in the epoxy-polyester hybrid crosslinkable composition and to the type by the at least an epoxy resin and by at least a carboxylated polyester resin the BHET enables obtaining films of epoxy-polyester hybrid crosslinked composition, according to the invention, having a TG (measurable using differential scanning calorimetry according to standard ISO 1356) that is greater than the mixture consisting of the linear dimer and the linear trimer.

With reference to figures 5A-5C, these demonstrate the variation of the ionic activity under alternated frequency stress in isothermy of the relative tested composition i.e: a known epoxy crosslinkable composition (Comp. 1 of the table of figure 3A) and a crosslinkable composition according to the invention (Comp. 2 of the table of figure 3A) isothermal at 160 °C (Fig. 3B) and isothermal at 180 °C (Fig. 3C). Note that, in figure 5A, the ionic viscosity of the molten compositions of the invention is initially very low and starts to increase progressively as the cure increases the degree of crosslinking, to become asymptotic at the highest value of crosslinking. The freedom of movement of the ions is totally inhibited, from which it can be deduced that the epoxy crosslinkable composition 2K from Bisphenol + epichlorohydrin (EPC), 1:1), once crosslinked is that of a heat-hardened material. In figure 5B, the ionic viscosity has an initial value that is very low (much lower than the initial value of figure 5A) and increases very slowly, after about ten minutes. The applicant has found that the value of ionic viscosity is asymptotic after at least 1 hour. Further, the level of ionic viscosity reached is decidedly lower than the level with respect to figure 5A, notwithstanding the fact that the tested crosslinkable composition of the invention was already crosslinked after only 20 minutes.

Also in figure 5C, the ionic viscosity has an initial value that is very low and increases very slowly, after about ten minutes. Note that the tested crosslinkable composition of the invention was already crosslinked after only 5 minutes. The applicant has found that beyond 1 hour the ionic viscosity is still growing slowly and reaches values that are decidedly lower than those shown in figure 5B. Typically, a thermoplastic polymer has a low ionic viscosity which denotes a system with a broad level of freedom and which reduces progressively as the temperature increases. On the contrary, the ionic viscosity of heat-hardening polymer is very high and does not vary as the temperature rises. The comparison of figure 5A with figures 5B and 5C shows that the tested crosslinkable composition of the invention gives rise to the corresponding crosslinked composition of the invention, which, at temperatures over the relative TG, measurable using differential scanning calorimetry according to standard ISO 1356, has a thermoplastic behaviour.

Particularly preferred is a crosslinkable prepreg composite laminate panel comprising a plurality of reinforcing fibres (advantageously in the form of textile, and more preferably glass fibre) and a solid epoxy-polyester hybrid crosslinkable composition which impregnates the plurality of reinforcing fibres in which the solid crosslinkable composition is obtainable by only fusion and subsequent cooling of a crosslinkable composition selected from a group consisting of: an epoxy-polyester hybrid crosslinkable composition according to the invention and an additivated epoxy-polyester hybrid crosslinkable composition according to the invention, wherein the fusion has a melting temperature which is lower than the crosslinking activation temperature of the at least a crosslinking activation catalyst contained in the crosslinkable composition.

This is because the crosslinkable prepreg composite laminate panel can give rise to an article (1) made of crosslinked composite material obtainable by crosslinking at least a crosslinkable prepreg composite laminate panel. The article (1) made of a crosslinked composite material can comprise a reinforcing element and is characterised in that it further comprises an epoxy-polyester hybrid crosslinked composition according to the invention solidly constrained and contiguous to the reinforcing element. In a preferred embodiment, the reinforcing element comprises or more preferably is constituted by a plurality of reinforcing fibres and the epoxy-polyester hybrid crosslinked composition impregnates the plurality of reinforcing fibres. The article (1) made of a crosslinked composite material is characterised in that it further comprises an epoxy-polyester hybrid crosslinked composition according to the invention, and is therefore recyclable.

The reinforcing fibres of the plurality of reinforcing fibres of the crosslinkable prepreg composite laminate panel according to the invention are advantageously made of a material selected from a group constituted by glass fibre, carbon fibre, ceramic fibre, aramid fibre (preferably Kevlar), flax fibre, hemp fibre, bamboo fibre, basalt fibre, polyethylene terephthalate (PET), recycled polyethylene terephthalate (also known as Recycled PET or R-PET) and mixtures thereof. Preferably they are made of glass fibre or carbon fibre, and advantageously are made of glass fibre, polyethylene

terephthalate (PET) or recycled polyethylene terephthalate (R-PET).

The reinforcing fibres are preferably in the form of a reinforcing cloth and more advantageously are glass fibre, polyethylene terephthalate (PET) or recycled polyethylene terephthalate (R-PET). In fact, the applicant has verified that, when the reinforcing fibres are in the form of a reinforcing cloth made of polyethylene terephthalate (PET) or recycled polyethylene terephthalate (R-PET) and the crosslinking conditions of the article (1) made of a crosslinked composite material of the invention include a crosslinking temperature of lower than 180 °C or the reinforcing cloth is made of polyethylene terephthalate (PET) or high-melting recycled polyethylene terephthalate (R-PET) (having melting temperatures of equal to or higher than 200°C) the weft of the reinforcing cloth (which can be a textile or a non-woven textile) is still evident after crosslinking, visually or by means of a structural FEM analysis. Also, when the reinforcing fibres are in the form of a reinforcing cloth made of PET or R-PET and the crosslinking conditions of the article (1) made of a crosslinked composite material according to the invention include a crosslinking temperature equal to or higher than 180°, or PET or R-PET is low-melting (having, therefore, melting temperatures of lower than 200 °C) the reinforcing cloth, following the crosslinking gives rise to a layer of PET or R-PET solidly constrained and contiguous to the epoxy-polyester hybrid crosslinked composition, according to the invention. This layer has high characteristics of mechanical resistance and rigidity that are greater than those of the reinforcing cloth. Therefore, a crosslinkable prepreg composite laminate panel particularly preferred according to the invention comprises a plurality of reinforcing fibres, comprising (and preferably constituted by) a reinforcing cloth made of PET or il R-PET, (especially when having a melting temperature of lower than 200 °C). In this case, it can be preferable that the epoxy-polyester hybrid crosslinkable composition, according to the invention, which impregnates the reinforcing cloth is crosslinkable at a temperature of lower than 180 °C. Obviously, an article is also preferred that is made of crosslinked composite material obtainable by crosslinking the crosslinkable prepreg composite laminate panel, and comprising, as the reinforcing element, a layer of PET or R-PET which, therefore, is solidly constrained and contiguous to the epoxy-polyester hybrid crosslinked composition, according to the invention. Owing to the low viscosity of the epoxy-polyester hybrid crosslinkable composition, once molten, it can advantageously effectively also impregnate reinforcing fibres not dressed with an agent that increases the wettability thereof (for example with an organosilane compound). In this way, the step of dressing the plurality of reinforcing fibres of the reinforcing element is rendered superfluous. This enables reducing the production costs and times, as well as limiting the use of chemical substances thus rendering the production of the crosslinkable prepreg composite laminate panel and the article (1) made of a crosslinked composite material of the invention more ecological and economical. Therefore, a crosslinkable prepreg composite laminate panel is particularly preferred according to the invention, in which the relative plurality of reinforcing fibres (preferably formed as a reinforcing cloth, more preferably a textile reinforcing cloth), are made of carbon fibre, glass fibre, ceramic fibre, basalt fibre, aramid fibre, Kevlar, flax fibre, hemp fibre, bamboo fibre, recycled polyester fibre, polyethylene terephthalate (PET) or recycled polyethylene terephthalate (R-PET), and wherein the epoxy-polyester hybrid crosslinkable composition is in direct contact with, respectively, the carbon, glass, ceramic, basalt, aramid, Kevlar, flax, hemp, bamboo, polyethylene terephthalate (PET), or recycled polyethylene terephthalate (R-PET) of the plurality of reinforcing fibres. In particular,a crosslinkable prepreg composite laminate panel according to the invention is extremely advantageous, wherein the relative plurality of reinforcing fibres is conformed as a reinforcing cloth made of a carbon fibre, glass fibre or basalt fibre, wherein the epoxy-polyester hybrid crosslinkable composition is in direct contact with, respectively, the carbon, the glass, the basalt of the textile reinforcing cloth, and wherein, optionally and preferably the textile reinforcing cloth is a reinforcing cloth made of textile, recycled by means of pyrolysis of an article made of a crosslinked composite material.

For the above-cited reasons, the invention also relates to a production method of a crosslinkable prepreg composite laminate panel, according to the invention, which includes following steps:

A) predisposing a plurality of reinforcing fibres;

B) predisposing a crosslinkable composition selected from a group consisting of: an epoxy-polyester hybrid crosslinkable composition according to the Invention, and an additivated epoxy-polyester hybrid crosslinkable composition according to the invention;

C) melting the crosslinkable composition predisposed in the preceding step at a lower temperature than the crosslinking activation temperature of the at least a crosslinking activation catalyst, contained in the predisposed crosslinkable composition, obtaining a molten crosslinkable composition;

D) impregnating the predisposed plurality of reinforcing fibres with the molten crosslinkable composition obtaining a plurality of impregnated fibres; and

E) laminating the plurality of impregnated fibres, obtaining a crosslinkable prepreg composite laminate panel; and

F) cooling the crosslinkable prepreg composite laminate panel obtained in the preceding lamination step E);

wherein the cooling step (F) is carried out within a time of less than 15 seconds (preferably less than 10 seconds) from the start of the fusion step C).

In particular it is extremely advantageous for the production method to comprise following steps:

- predisposing a textile reinforcing cloth made of a carbon fibre, a glass fibre, ceramic fibre or basalt fibre, wherein, optionally, the material made of textile is a textile cloth, recycled by means of pyrolysis of an article made of a crosslinked composite material;

and wherein the impregnation step of the plurality of reinforcing fibres is as follows:

- impregnating the reinforcing cloth with the molten crosslinkable composition, placing the molten crosslinkable composition in direct contact with, respectively, the carbon, the glass, the basalt of the textile reinforcing cloth, obtaining an impregnated reinforcing cloth.

In this way, as well as avoiding the use of primers, a cloth recycled by means of pyrolysis can be used, in particular made of carbon fibre, with no further processing prior to impregnation. In this case, as on the increasing of the fourth percentage (%4) of at least a monomeric and/or oligomeric reactant in the epoxy-polyester hybrid crosslinkable composition, once molten, the viscosity of the composition reduces, it is progressively preferable for the fourth percentage (%4) to be equal to or greater than 6%, 8%, 10%, 15%, 20%, 25%, 30%, 35%, and 40%. The step of impregnation of the reinforcing element can be advantageously carried out by using a continuous laminator supplied with the epoxy-polyester hybrid crosslinkable composition, which is in powder form, heating the composition by means of IR lamps and subsequent cooling using a calender and ventilation.

The applicant has subjected to traction tests, using a dynamometer (3PB and traction) and DMA (3PB and traction), crosslinked prepreg composite laminate panels according to the invention obtained by crosslinking the crosslinked prepreg composite laminate panels according to the invention. These have been produced using a reinforcing cloth made of carbon fibre recycled by pyrolysis and an epoxy-polyester hybrid crosslinkable composition according to the invention reported as Comp. 2 of table 3 of figure 3. The tested prepreg composite laminate panels had a thickness of 1.6 mm and 3.0 mm and a ratio, between the percentages in weight of epoxy-polyester hybrid crosslinked composition and of the reinforcing fibres of the reinforcing cloth, and, respectively, 48:52 and 47:53. For the tests carried out using the dynamometer in 3PB, third specimens were made from the crosslinked prepreg composite laminate panels having: effective length: 50 mm. width: 14.5 mm; thickness: 1.5 mm. and fourth specimens were made from the thicker panels, having: effective length: 80 mm. width: 14.1 mm; thickness: 2.6 mm. The dynamometer tests were carried out under the following conditions: velocity: 3 mm/min; load cell: 10 kN. The average values are reported in the following table.

| Samples | Third specimens | Fourth specimens |
|---|---|---|
| Module (Mpa) | 11775 | 9270 |
| Dev. Standard (Mpa) | 950 | 735 |
| Max force (Mpa) | 309 | 294 |
| Dev. Standard (Mpa) | 19 | 26 |
| Max deformation (mm) | 0.044 | 0.079 |
| Dev. Standard (mm) | 0.003 | 0.012 |

Table 1

For the tests carried out using the dynamometer in traction, first specimens were made from the crosslinked prepreg composite laminate panels having: effective length: 30 mm. width: 7.5 mm; thickness: 1.7 mm and second specimens were made from the thicker panels, having: effective length: 30 mm. width: 7.7 mm; thickness: 2.0 mm. The dynamometer tests were carried out under the following conditions: velocity: 1 mm/min; load cell: 10 kN. The average

values are reported in the following table 2.

| Samples | First specimens | Second specimens |
|---|---|---|
| Module (Mpa) | 28103 | 23899 |
| Dev. Standard (Mpa) | 3427 | 965 |
| Max force (Mpa) | 604 | 560 |
| Dev. Standard (Mpa) | 72 | 77 |
| Max deformation (mm) | 0.021 | 0.019 |
| Dev. Standard (mm) | 0.002 | 0.002 |

Table 2

It is clear that the panels have a significant mechanical resistance.

The production method of an article made of a crosslinked composite material according to the invention, obviously includes the use of at least a crosslinkable prepreg composite laminate panel according to the invention.

The article made of a crosslinked composite material produced has following characteristics: is obtainable by crosslinking at least a crosslinkable prepreg composite laminate panel according to the invention; which comprises a reinforcing element constituted by a plurality of reinforcing fibres; and an epoxy-polyester hybrid crosslinked composition according to the invention, wherein the epoxy-polyester hybrid crosslinked composition is arranged solidly constrained and contiguous to the reinforcing element and impregnates the plurality of reinforcing fibres.

The reinforcing element is preferably a layer of polyethylene terephthalate (PET) or recycled polyethylene terephthalate (R-PET).

Particularly preferred is an article (1) made of a crosslinked composite material, obtainable by crosslinking of a plurality of second crosslinkable prepreg composite laminate panels according to the invention, wherein the crosslinkable prepreg composite laminate panels (7) of the crosslinkable prepreg composite laminate panels are stacked, one in direct contact with the subsequent one (see figure 8 which illustrates the relative crosslinked prepreg composite laminate panels (7)). The article can have a variable thickness (S1, S2), as illustrated in figure 15.

In a relative alternative embodiment, also preferred and illustrated in figure 7, the article (1) made of a crosslinked composite material can be obtainable by crosslinking a multilayer structure (11) comprising two crosslinkable prepreg composite laminate panels according to the invention, and a filler element (8) arranged between the two crosslinkable prepreg composite laminate panels. The filler element (8) is preferably made of foam PET or of a plastic material of like specific weight. The articles are preferably conformed as a half-shell, advantageously as a half-shell of a watercraft element or of a blade for wind turbines. Consequently, watercraft elements are preferred (windsurfing and kitesurfing boards, canoes, kayaks, Flyboards for a Hydrojet, hulls, for example for inflatable watercraft, and jet-skis, etc. or a wind turbine blade) and the wind turbine blades made of a crosslinked composite material, comprising a hollow body, which has an empty and closed concavity and comprises a first and a second article (1) made of a crosslinked composite material according to the Invention, conformed as half-shells.

The production method of a composite object made of a crosslinked composite material and having an empty hollow body (for example a watercraft element or a wind turbine blade) comprises following steps:

- predisposing an article (1) made of a crosslinked composite material according to the invention and conformed as a first half-shell (preferably, of a watercraft element or wind turbine blade) having a first perimeter edge;

- predisposing a further article (1) made of a crosslinked composite material according to the invention and conformed as a second half-shell (preferably, of a watercraft element or wind turbine blade) and having a second perimeter edge;

- arranging, between the entire first perimeter edge and the entire second perimeter edge, a welding device (9) made of a crosslinkable pre-preg composite material (see figure 14) in turn comprising: a reinforcing element comprising a plurality of carbon fibres, wherein at least a part of the carbon fibres (10) of the plurality of carbon fibres is arranged along a relative direction which goes from a first longitudinal end to a second longitudinal end of the reinforcing

element; and a crosslinkable composition (11), which is solidly constrained toand impregnates the reinforcing element, and which forms a first crosslinkable layer on a first side of the reinforcing element and a second crosslinkable layer on a second side of the reinforcing element, opposite the first side of the reinforcing element, wherein the crosslinkable composition is selected from a group consisting of: an epoxy-polyester hybrid crosslinkable composition according to the invention, and an additivated epoxy-polyester hybrid crosslinkable composition according to the invention, wherein the crosslinkable composition has a crosslinking temperature and wherein the crosslinkable layer (11) is arranged about, and in contact with, the reinforcing element, and extends, at least partially, along the direction, leaving uncovered the first end and the second longitudinal end of the reinforcing element; a first electrical connector and a second electrical connector, electrically connected, respectively, to the first longitudinal end and second longitudinal end of the reinforcing element, arranging the first and second electrical connector externally of the first perimeter edge and the second perimeter edge, and, optionally, inserting at least a floating element between the article (1) made of a crosslinked composite material and the further article (2) made of a crosslinked composite material (see figure 14);

- passing an electrical current between the first electrical connector and the second electrical connector for heating the reinforcing element made of carbon fibre of the at least a welding device (9) to a crosslinking temperature equal to or higher than the crosslinking temperature of the crosslinkable composition of the crosslinkable layer (11), and comprised between 130°C and 250°C welding the first perimeter edge to the second perimeter edge and obtaining the composite object.

The floating element is, obviously, provided should the composite object be a waterborne object and can be advantageously shaped as a buoyancy compartment, which can be made of very low-density foam PET (for example, 47 kg/m$^3$). Alternatively, it can be a bag made of impermeable plastic material and, preferably, flexible, filled with air.

In the case of objects or articles made of a crosslinked composite material for watercraft according to the invention, it is possible for the treadable surface thereof to comprise a grip pad made of soft polymeric material for giving greater comfort and grip for the positioning of the feet. The grip pad, if made of polymer materials compatible with the crosslinking conditions, can be inserted directly into the die, in which a suitable housing will be created. This enables avoiding successive processing of the composite object according to the invention relative to the fixing of the grip pad which in the composite objects of known type includes the use of glue. Note that according to the invention the entire composite object according to the invention can be recycled.

Referring to figures from 10 to 14, the first perimeter edge can have a transversal section that is at least partially convex and the second perimeter edge has a transversal section that is at least partially concave and complementary to the transversal section of the first perimeter edge. This confers a greater resistance to the weld obtained.

Preferably, in a case where the predisposing step of the first article (1) made of a crosslinked composite material and/or of the further article (1) made of a crosslinked composite material comprises following substeps:

- predisposing: a bottom die (3), which is heatable and which has an operative surface; and a top die (4) which is heatable;

- arranging, in the bottom die (3), at least a first crosslinkable prepreg composite laminate panel (7) according to the invention, in such a way that the at least a first crosslinkable prepreg composite laminate panel covers the entire operative surface of the bottom die, wherein the first crosslinkable prepreg composite laminate panel is crosslinkable at a crosslinking temperature;

- arranging, on the at least a first crosslinkable prepreg composite laminate panel (7), at predetermined portions of the operative surface of the bottom die, a plurality of second crosslinkable prepreg composite laminate panels according to the invention, in which the plurality of second crosslinkable prepreg composite laminate panels is crosslinkable at the crosslinking temperature; in which the plurality of reinforcing fibres of each second crosslinkable prepreg composite laminate panel of the plurality of second crosslinkable prepreg composite laminate panels: is constituted by a textile having a primary direction (for example, the direction of the warp or weft); wherein, optionally, the primary directions of the textiles of the plurality of second composite laminate panels are arranged inclined or perpendicular to one another (preferably inclined by an angle of lower than 90°), optionally, arranging, on the plurality of second crosslinkable prepreg composite laminate panels a nautical track box (12) (see figure 9) made of a thermoplastic material which is resistant to the crosslinking temperature of the at least a first crosslinkable prepreg composite laminate panel; and, optionally, arranging, on the plurality of second crosslinkable prepreg composite laminate panels, a protective polymeric film (preferably while) made of a material able to resist ultraviolet radiations and comprising a polymeric material selected from polyethylene terephthalate (PET), polycarbonate, elastomeric polyester, heat-hardening polyester, polypropylene, polyethylene, and copolyamide;

- superposing the top die (4) on the bottom die (3);

- crosslinking, by heating the bottom die (3) and the top die (4), the at least a first crosslinkable prepreg composite laminate panel and the plurality of second crosslinkable prepreg composite laminate panels to a temperature equal to or greater than the crosslinking temperature, obtaining an article (1) made of a crosslinked composite material and/or the further article (1) made of a crosslinked composite material comprising: a first crosslinked prepreg composite laminate panel; and a plurality of crosslinked prepreg composite laminate panels which derives from the plurality of second crosslinkable prepreg composite laminate panels and which is solidly constrained to the first crosslinked prepreg composite laminate panel.

In this case, following the step of passing electrical current, a composite object is obtained in which the plurality of crosslinked prepreg composite laminate panels is able to distribute the forces applied thereon on the surface of the composite object, thus increasing the localised mechanical resistance. This object is entirely recyclable. The plurality of crosslinked prepreg composite laminate panels, deriving from the plurality of second crosslinkable prepreg composite laminate panels, is easily identifiable by means of a structural FEM analysis.
The material made of a material able to resist ultraviolet radiations advantageously consists of at least a UV anti-radiation agent, of at least a colorant agent and the polymeric material.
It is clear that the plurality of crosslinked prepreg composite laminate panels deriving from the plurality of second crosslinkable prepreg composite laminate panels can be advantageously arranged at the points where stress zones may be created. For example, in the case of watercraft, and more specifically windsurf or kaysurf boards, these points can be at the position of the foot of the mast of the sail or the undercuts (12) or the fixing zones of the foil, or of the zone of maximum stress to the load/thrust of the athlete.
With reference to figure 9, the predisposing step of the article (1) made of a crosslinked composite material and/or the further article (1) made of a crosslinked composite material can include optionally, arranging, on the nautical track box (12), at the plurality of second crosslinkable prepreg composite laminate panels. The track box (12) can preferably be made of or comprise a polymeric material, such as for example polyethylene and polybutylene terephthalate (PET and PBT), polycarbonate, elastomeric polyester, heat-hardening polyester, polypropylene, polyethylene, and copolyamide.
The production of an article made of a crosslinked composite material according to the invention, can include obtaining a multi-layer crosslinkable structure having a first and a second side, opposite the first side and comprising: a first crosslinkable prepreg composite laminate panel according to the invention arranged at the first side.
The first crosslinkable prepreg composite laminate panel can advantageously be a first decorated crosslinkable prepreg composite laminate panel, which comprises: a decorated reinforcing cloth and an epoxy-polyester hybrid crosslinkable composition according to the Invention which crosslinks by forming an epoxy-polyester hybrid crosslinked composition according to the invention, at least partially transparent. The decorated reinforcing cloth comprises: a first surface; and a coloured decoration arranged on the first surface and solidly constrained to this latter. The coloured decoration comprises at least a coloured composition, which is insoluble in the epoxy-polyester hybrid crosslinkable composition and is resistant to the crosslinking conditions of the multi-layer crosslinkable structure. The coloured decoration is arranged at the first side of the multi-layer crosslinkable structure. By crosslinking the multi-layer crosslinkable structure in the relative crosslinking conditions, it is possible to directly obtain a decorated article made of a crosslinked composite material according to the Invention and comprising: the coloured decoration, which is visible at a first face of the decorated article and which is arranged beneath a film made of the epoxy-polyester hybrid crosslinked composition, according to the Invention, at least partially transparent, which proctects it from light and impacts and scraping.
Alternatively, the multi-layer crosslinkable structure can include a decorated element comprising: a protective sheet which is at least partially transparent, which is made of a material selected from among: polyethylene terephthalate (PET), polybutylene terephthalate (PBT), polycarbonate (PC), polypropylene (PP), polyethylene (PE), elastomeric polyesters (COPE), copolymers of the polyamide (CoPA), and polyethylene additivated with acrylic with acrylic, wherein the protective sheet is resistant to the crosslinking conditions and has a first side; and wherein the decorated element further comprises the above-mentioned coloured decoration which is arranged at and is solidly to the first side of the protective sheet. In this case, in the multilayer structure, the decorated element is arranged with the first side of the protective sheet in contact with the first crosslinkable prepreg composite laminate panel according to the invention. Following the crosslinking of the crosslinking conditions of the multi-layer crosslinkable structure, a decorated article is directly obtained of a crosslinked composite material according to the Invention and comprising: the coloured decoration, which is visible at a first face of the decorated article and which is arranged beneath the protective sheet, which constitutes a protective film distal of the article made of decorated crosslinked composite material according to the Invention.
In both cases, the coloured decoration is visible from outside the article but is not subject to wear or deterioration.
The applicant has found that polyethylene terephthalate (PET), polybutylene terephthalate (PBT), polycarbonate (PC), polypropylene (PP), polyethylene (PE), elastomeric polyesters (COPE), copolymers of the polyamide (CoPA), and

polyethylene additivated with acrylic, following the crosslinking of the multilayer crosslinkable structure, solidly adhere to the epoxy-polyester hybrid crosslinked composition according to the Invention. An object having a empty hollow body, made of a crosslinked composite material, is preferred:

- a first half-shell and a second half-shell, both made of a first crosslinked composite material comprising a plurality of reinforcing fibres and an epoxy-polyester hybrid crosslinked composition according to the invention which impregnates the plurality of reinforcing fibres, wherein the first half-shell and the second half-shell have, respectively, a first perimeter edge and a second perimeter edge which are mutually entirely superposable;

- a welding portion which is interposed between the first perimeter edge and the second perimeter edge and which is solidly constrained , to the entire first perimeter edge and the entire second perimeter edge and which is made of a second crosslinked composite material constituted by a reinforcing element made of carbon fibre and by an epoxy-polyester hybrid crosslinked composition according to the invention. The applicant has a further preference in the creation of a body filled with foam material of the PET or R-PET type, of any weight or density, entirely clad with crosslinkable Prepreg laminate with the object formula, consolidated in a single operation in a closed die.

The invention also relates to a production method of an article (1) made of a crosslinked composite material according to the invention, comprising following steps:

- predisposing a die: which is a die for injection moulding; which is predisposed for injection moulding of a thermoplastic material; and which comprises a concave inner wall;

- inserting a crosslinkable prepreg composite laminate panel according to the invention into the die, with the crosslinked laminate panel at least partially in contact with the concave inner wall of the die;

- injecting, into the die, while the third crosslinkable prepreg composite laminate panel is crosslinking, a preselected thermoplastic material, which is selected from among polyethylene terephthalate (PET), polybutylene terephthalate (PBT), polycarbonate (PC), polypropylene (PP), polyethylene (PE), elastomeric polyesters (COPE), copolymers of the polyamide (CoPA), obtaining an article made of a crosslinked composite material:

  a crosslinked prepreg composite laminate panel (7), which derives from the crosslinking of the crosslinkable prepreg composite laminate panel in the die and which forms a housing;

  and a first complementary element made of the preselected thermoplastic material: which is solidly constrained to and in direct contact with, at the first housing, with the crosslinked prepreg composite laminate panel (7); and which is partially projecting from the housing.

According to the production method of an article (1) made of a crosslinked composite material it is advantageously possible to directly obtain, during the reaction, an article (1) made of a crosslinked composite material comprising the first complementary element, saving time and labour with respect to known production methods of an article made of a crosslinked composite material, comprising a complementary element fixed with a glue.

Also advantageous is a further production method of an article made of a crosslinked composite material according to the invention, comprising following steps:

- predisposing a further die which is a die for injection moulding; which is predisposed for injection moulding of a thermoplastic material; and which comprises a concave inner wall;

- arranging, above a crosslinkable prepreg composite laminate panel according to the invention and in contact therewith, a sheet made of a preselected thermoplastic material, which is selected from among polyethylene terephthalate (PET), polybutylene terephthalate (PBT), polycarbonate (PC), polypropylene (PP), polyethylene (PE), elastomeric polyesters (COPE), copolymers of the polyamide (CoPA), and polyethylene additivated with acrylic, obtaining a multi-layer crosslinkable structure comprising the crosslinkable prepreg composite laminate panel and the sheet; optionally, crosslinking the multi-layer crosslinkable structure obtaining a multi-layer crosslinked structure which comprises: a crosslinked prepreg composite laminate panel (7) deriving from the crosslinking of the crosslinkable prepreg composite laminate panel; and a layer which is made of the preselected thermoplastic material, and which is solidly constrained to and in direct contact with the crosslinked prepreg composite laminate panel (7),

- inserting, in the die for injection moulding, an element which, when the preceding step of crosslinking is omitted,

consists of the multi-layer crosslinkable structure, with the sheet in contact with the concave inner wall of the further die; and which, when the preceding step of crosslinking is included, consists of the multi-layer crosslinked structure, with the layer being arranged with the concave inner wall of the further die;

- injecting, into the die, the preselected thermoplastic material of the sheet in the molten state, crosslinking, when present, the multi-layer crosslinkable structure, crosslinking it, and obtaining an article made of a crosslinked composite material comprising: a crosslinked prepreg composite laminate panel (7) which forms a housing; a complementary element made of the preselected thermoplastic material: which is solidly constrained to and in direct contact with, at the first housing, with the crosslinked prepreg composite laminate panel (7); and which is partially projecting from the housing; and a distal layer made of the preselected thermoplastic material which is fixed to the crosslinked prepreg composite laminate panel (7) on an opposite side with respect to the complementary element.

According to the further production method of an article (1) made of a crosslinked composite material it is advantageously possible to directly obtain, during the crosslinking of the multi-layer crosslinkable structure, an article (1) made of a crosslinked composite material comprising the first complementary element, saving time and labour with respect to known production methods of an article made of a crosslinked composite material, comprising a complementary element fixed with a glue. Also, the inserting into the die of the multi-layer crosslinked structure enables advantageously deciding at a time following the crosslinking of the crosslinkable composition according to the invention, which complementary element to use and in which position it is to be added to the multi-layer crosslinked structure.

Note that, by virtue of the epoxy-polyester hybrid crosslinked composition comprised in the multi-layer crosslinked structure it is thermoformable and thus it is possible to form the second housing in the step of injecting which obviously leads to the use of heat due to the molten thermoplastic material and to the relative overmould.

Obviously, the invention also relates to the two different embodiments of the article made of a crosslinked composite material according to the invention obtainable by actuating the two cited production methods and comprising the first or second complementary element made of thermoplastic material (not illustrated).

Extremely advantageous is a recycling method of an article (1) made of a crosslinked composite material, comprising a following step:

- predisposing an article (1) made of a composite material according to the invention, having a first conformation;

- heating the article made of a composite material to a temperature that is higher than the single glass transition temperature (TG), measurable using differential scanning calorimetry according to standard ISO 1356, of the epoxy-polyester hybrid crosslinked composition comprised in the article (1) made of a crosslinked composite material, obtaining an article (1) made of a heated crosslinked composite material; and

- newly thermoforming at least a portion of the article (1) made of a heated crosslinked composite material obtained in the preceding step, to obtain the further article (1) made of a composite material having a second conformation, different to the first configuration. The temperature to which the article made of composite material is preferably heated is 30 °C greater than the glass transition temperature (TG), measured using differential scanning calorimetry according to standard ISO 1356.

According to the invention, a further recycling method is included of an article (1) made of crosslinked composite material according to the invention. It comprises following steps:

- grinding an article (1) made of a crosslinked composite material according to the invention, obtaining a plurality of granules;

- mixing the plurality of granules with a first molten thermoplastic composition, obtaining a thermoformable mixture;

- thermoforming the thermoformable mixture obtaining a further article (1) made of a crosslinked composite material made of the thermoformable mixture.

In the further recycling method the epoxy-polyester hybrid crosslinked composition can advantageously have a TG, measured using differential scanning calorimetry according to standard ISO 1356, of greater than 110 °C, 115 °C, 120 °C, 125°C, or more advantageously 130°C.

The ambit of the present invention also relates to a recycling method of an article made of a crosslinked composite material, comprising a following step:

- dissolving an article (1) made of a crosslinked composite material according to the invention, or parts thereof, in a bath of polyethylene glycol (PEG) heated to about 195°C and in the presence of depolymerisation catalysts obtaining a biphasic mixture constituted by: a solid component and a liquid component which comprises, in turn, monomers and polymers, which have a number of monomers comprised between 1 and 10 (and which preferably are only monomers, dimers and trimers);

- separating, from the biphasic mixture, the liquid component from the solid component;

- subjecting the liquid component separated during the preceding step, to a fractional solidification process, in order to separate the monomers from the polymers.

The number of monomers is measurable using gel permeation chromatography, as described herein above, using as a calibration standard the method previously mentioned.

For example, the epoxy-polyester hybrid crosslinked composition is recyclable by solubilisation and decomposition to primary monomers/oligomers, using the ChemPet process according to Italian Patent no. IT201900025039A1.

## Claims

1. Use of at least a monomeric and/or oligomeric reactant in production of an epoxy-polyester hybrid crosslinkable composition, wherein the monomeric and/or oligomeric reactant: is in powder form; is crosslinkable in thermoplastic polyethylene terephthalate (PET); in a percentage comprised between 5% and 45%, calculated in weight/weight with respect to the epoxy-polyester hybrid crosslinkable composition; and is selected from a group consisting of:

    C1) a first mixture: which is a monomeric and oligomeric mixture of depolymerisation of the polyethylene terephthalate (PET), which is free of glycols, which is obtainable from a depolymerisation mixture, by means of glycolysis, of the polyethylene terephthalate (PET);
    C2) a second mixture which comprises:

        a linear dimer of (2-hydroxyethyl) benzene-1,4-dicarboxylate having a chemical formula as follows:

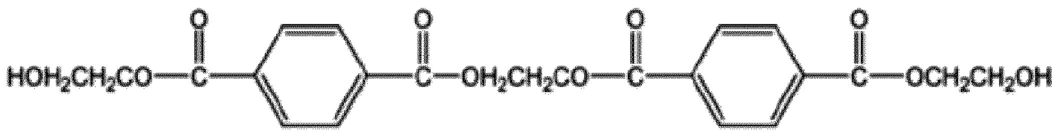

        ; and
        a linear trimer of (2-hydroxyethyl) benzene-1,4-dicarboxylate having a chemical formula as follows:

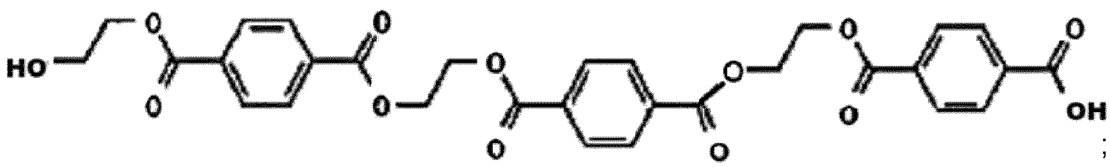

;

    C3) said linear dimer of (2-hydroxyethyl) benzene-1,4-dicarboxylate;
    C4) said linear trimer of (2-hydroxyethyl) benzene-1,4-dicarboxylate;
    C5) bis(2-hydroxyethyl) benzene-1,4-dicarboxylate (BHET); and mixtures thereof.

2. Use of at least a monomeric and/or oligomeric reactant in production of an epoxy-polyester hybrid crosslinkable composition according to the independent claim, wherein the mixing of the reaction reagents in powder form, for the production of an epoxy-polyester hybrid crosslinkable composition, takes place in powder form, and wherein the crosslinking reaction takes place at a temperature comprised between 130°C and 250°C.

3. An epoxy-polyester hybrid crosslinkable composition; which is solid at ambient temperature and which is in powder form, and which consists of:

- at least a crosslinking activation catalyst; which has a crosslinking activation temperature: which is in powder form; which is selected from among: 2-methylimidazole; imidazole, 2-phenylimidazole, benzylimidazole; and their relative mixtures; which has a first percentage, calculated in weight/weight on the total of the epoxy-polyester hybrid crosslinkable composition, wherein the first percentage is comprised between 0.5% and 10%;
- a group of crosslinkable components, which has a second percentage, calculated in weight/weight on the total of the epoxy-polyester hybrid crosslinkable composition; wherein the second percentage is comprised between 90.0% and 99.5%, and wherein the group of components is constituted by:

A) at least an epoxy resin: which is obtainable from the reaction of Bishphenol A (BPA) and epichlorohydrin (EPC); which is crosslinkable; which is in powder form; which has a molecular weight comprised between 600 and 1000 Mw, measurable using gel permeation chromatography; which has epoxy equivalent weight (EEW), measurable using standard Uni ISO 3001, wherein the at least an epoxy resin has a third percentage (%3), calculated in weight/weight with respect to the epoxy-polyester hybrid crosslinkable composition;
B) at least a carboxylated polyester resin: which is obtainable by reaction between a carboxylic acid and a polyol; which is crosslinkable; which is in powder form; which has a value of carboxyl number (AV) expressed as mg KOH/gr of carboxylated polyester resin; wherein at least a carboxylated polyester resin has a fourth percentage (%4), calculated in weight/weight with respect to the epoxy-polyester hybrid crosslinkable composition; and which comprises:

B1) at least an unsaturated carboxylated polyester resin; which is obtained by reaction between a carboxylic acid and a polyol; which is crosslinkable; which is in powder form; and which has a fifth percentage, calculated in weight/weight with respect to the epoxy-polyester hybrid crosslinkable composition;
B2) optionally, at least a thermoplastic polyester: which is in powder form; and which has a sixth percentage, calculated in weight/weight with respect to the epoxy-polyester hybrid crosslinkable composition,
wherein the third percentage (%3) of the at least an epoxy resin and the fourth percentage (%4) of the at least a carboxylated polyester resin are, between them, balanced according to the epoxy equivalent weight (EEW) of the at least an epoxy resin and the carboxyl number (AV) of the at least a carboxylated polyester resin;

C) at least a monomeric and/or oligomeric reactant: which is in powder form; which is crosslinkable in polyethylene terephthalate (PET); which is in a seventh percentage, calculated in weight/weight with respect to the epoxy-polyester hybrid crosslinkable composition, which is comprised between 5% and 45%;

wherein the ratio between the third percentage (%3) of the at least an epoxy resin and the sum of the fourth percentage (%4) of the at least a carboxylated
polyester resin and of the seventh percentage of the monomeric and/or oligomeric reactant: is comprised between 1 and 19;
and wherein the sum of the third percentage (%3) of the at least an epoxy resin, of the fourth percentage (%4) of the at least a carboxylated polyester resin, is comprised between 55% and 95%;
wherein the at least a monomeric and/or oligomeric reactant is selected from a group consisting of:

C1) a first mixture: which is a monomeric and oligomeric mixture of depolymerisation of the polyethylene terephthalate (PET), which is free of glycols, which is obtainable from a depolymerisation mixture, by means of glycolysis, of the polyethylene terephthalate (PET);
C2) a second mixture which comprises:

- a linear dimer of (2-hydroxyethyl) benzene-1,4-dicarboxylate having a chemical formula as follows:

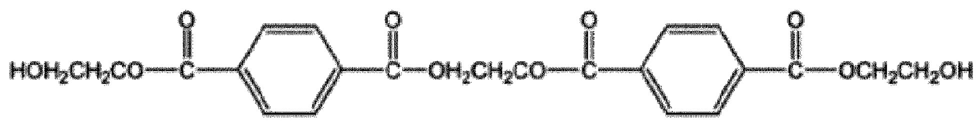

; and
- a linear trimer of (2-hydroxyethyl) benzene-1,4-dicarboxylate having a chemical formula as

follows:

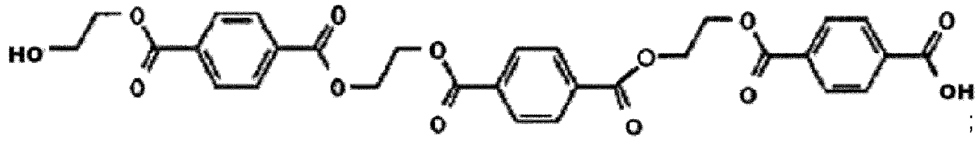
;

C3) said linear dimer of (2-hydroxyethyl) benzene-1,4-dicarboxylate;
C4) said linear trimer of (2-hydroxyethyl) benzene-1,4-dicarboxylate;
C5) bis(2-hydroxyethyl) benzene-1,4-dicarboxylate (BHET);
and their relative mixtures, wherein:

the epoxy-polyester hybrid crosslinkable composition is obtainable by only mixing of: the at least an epoxy resin; the at least a carboxylated polyester resin; the at least a monomeric and/or oligomeric reactant; the at least a crosslinking activation catalyst; and
wherein the epoxy-polyester hybrid crosslinkable composition, following only heating thereof to a crosslinking temperature: which is equal to or higher than the crosslinking activation temperature of the at least a crosslinking activation catalyst; and which is comprised between 130°C and 250°C, is crosslinkable in an epoxy-polyester hybrid crosslinked composition: which has a single glass transition temperature (TG), measured using differential scanning calorimetry according to standard ISO 1356; and which is thermoformable to a temperature of higher than the further single glass transition temperature (TG)
wherein the third percentage (%3) of the at least an epoxy resin and the fourth percentage (%4) of the at least a carboxylated polyester resin are, between them, balanced according to the epoxy equivalent weight, signifies that considering a group of resins constituted only: by the at least an epoxy resin and the at least a carboxylated polyester resin; the percentage of the of the at least a carboxylated polyester resin (%RPC) calculated in weight/weight with respect to the total weight of the group of resins will be given by a formula as follows:

$$\%RPC = 56100/(56100 + AV * EEW) *100$$

and the percentage of the at least an epoxy resin (%RE) calculated in weight/weight with respect to the total weight of the group of resins will be given by a formula as follows:

$$\%RE = 100 -\% RPC$$

and that the ratio between the third percentage (%3) of the at least an epoxy resin divided by the fourth percentage (%4) of the at least a carboxylated polyester resin is equal to the ratio between the above-mentioned percentage of the at least a carboxylated polyester resin (% RPC) divided by the above-mentioned percentage of the at least an epoxy resin (%RE) in that group of resins, i.e:

$$(\%3)/(\%4) = \%RE/\%RPC = (100 - (56100/(56100 + AV * EEW) * 100) /(56100/(56100 + AV * EEW) * 100 .$$

4. The epoxy-polyester hybrid crosslinkable composition, according to the preceding claim, comprising the at least a thermoplastic polyester.

5. The epoxy-polyester hybrid crosslinkable composition, according to claim 3 or 4, wherein the seventh percentage of the at least a monomeric and/or oligomeric reactant is equal to or above 30%.

6. An additivated epoxy-polyester hybrid crosslinkable composition, consisting of:

- an epoxy-polyester hybrid crosslinkable composition according to any one of claims 3-5, in an eighth percentage calculated in weight/weight with respect to the additivated epoxy-polyester hybrid crosslinkable composition;

wherein the eighth percentage is comprised between 70% and 99.9%; and

- a component: which is selected from a group of components consisting of: at least an additive, at least a colorant, at least a filler and at least a flame retardant, and relative mixtures thereof; wherein the component has a ninth percentage, calculated in weight/weight with respect to the additivated epoxy-polyester hybrid crosslinkable composition, wherein the ninth percentage is comprised between 0.1% and 30%;

wherein the additivated epoxy-polyester hybrid crosslinkable composition, after only mixing and subsequent heating thereof, to a crosslinking temperature: which is equal to or higher than the crosslinking activation temperature of the at least a crosslinking activation catalyst comprised in the epoxy-polyester hybrid crosslinkable composition; and which is comprised between 130°C and 250°C, is crosslinkable in a further epoxy-polyester hybrid crosslinked composition: which has a further single glass transition temperature (TG), measured using differential scanning calorimetry according to standard ISO 1356; and which is thermoformable to a temperature of higher than the further single glass transition temperature (TG).

**7.** The epoxy-polyester hybrid crosslinked composition, obtainable by crosslinking, at a crosslinking temperature comprised between 130°C and 250°C, a crosslinkable composition selected from a group consisting of: an epoxy-polyester hybrid crosslinkable composition according to any one of claims 3-5; and an additivated epoxy-polyester hybrid crosslinkable composition according to claim 6, wherein the epoxy-polyester crosslinked composition is **characterised in that** it has a single glass transition temperature (TG), measured using differential scanning calorimetry according to standard ISO 1356, and **in that**, when it is at a temperature that is higher than the single glass transition temperature (TG), it is thermoformable.

**8.** The epoxy-polyester hybrid crosslinked composition, according to claim 7, having a glass transition temperature (TG), measured using differential scanning calorimetry according to standard ISO 1356, of equal to or higher than 130°C.

**9.** A production method of an epoxy-polyester crosslinked composition, wherein the epoxy-polyester crosslinked composition is according to claim 7 or 8, wherein the production method comprises following steps:

- predisposing a crosslinkable composition selected from a group consisting of: an epoxy-polyester hybrid crosslinkable composition according to any one of claims 3-5, and an additivated epoxy-polyester hybrid crosslinkable composition according to claim 6;

heating the crosslinkable composition predisposed in the preceding step to a crosslinking temperature: which is equal to or higher than the crosslinking activation temperature of the at least a crosslinking activation catalyst contained in the crosslinkable composition predisposed in the preceding step; wherein the crosslinking temperature is comprised between 130°C and 250°C, obtaining a liquid crosslinkable composition which crosslinks to produce the epoxy-polyester hybrid crosslinked composition.

**10.** The production method according to the preceding claim, wherein the predisposing step of the crosslinkable composition comprises only the mixing of the relative components while the relative components are in powder form.

**11.** A crosslinkable prepreg composite laminate panel comprising a plurality of reinforcing fibres and a solid epoxy-polyester hybrid crosslinkable composition which impregnates the plurality of reinforcing fibres, wherein the solid crosslinkable composition is obtainable by only fusion and subsequent cooling of a crosslinkable composition selected from a group consisting of: an epoxy-polyester hybrid crosslinkable composition according to any one of claims 3-5, and an additivated epoxy-polyester hybrid crosslinkable composition according to claim 4, wherein the fusion has a melting temperature which is lower than the crosslinking activation temperature of the at least a crosslinking activation catalyst contained in the crosslinkable composition.

**12.** The crosslinkable prepreg composite laminate panel of the preceding claim, wherein the relative plurality of reinforcing fibres is conformed as a reinforcing cloth made of a carbon fibre, glass fibre or basalt fibre, wherein the epoxy-polyester hybrid crosslinkable composition is in direct contact with, respectively, the carbon, the glass, the basalt of the textile reinforcing cloth, and wherein optionally the textile reinforcing cloth is a reinforcing cloth made of textile, recycled by means of pyrolysis of an article made of a crosslinked composite material.

**13.** The production method of a crosslinkable prepreg composite laminate panel, wherein the crosslinkable prepreg composite laminate panel is according to claim 11 or 12, wherein the production method comprising following steps:

A) predisposing a plurality of reinforcing fibres;
B) predisposing a crosslinkable composition selected from a group consisting of: an epoxy-polyester hybrid crosslinkable composition according to any one of claims 3-5, and an additivated epoxy-polyester hybrid crosslinkable composition according to claim 6;
C) fusing the crosslinkable composition predisposed in the preceding step at a lower temperature than the crosslinking activation temperature of the at least a crosslinking activation catalyst, contained in the predisposed crosslinkable composition, obtaining a molten crosslinkable composition;
D) impregnating the predisposed plurality of reinforcing fibres with the molten crosslinkable composition obtaining a plurality of impregnated fibres; and
E) laminating the plurality of impregnated fibres, obtaining a crosslinkable prepreg composite laminate panel; and
F) cooling the crosslinkable prepreg composite laminate panel obtained in the preceding lamination step E)

wherein the cooling step (F) is carried out within a time of less than 15 seconds from the start of the fusion step C).

**14.** The production method according to the preceding claim, wherein the predisposing step of the a plurality of reinforcing fibres is as follows:

- predisposing a textile reinforcing cloth made of a carbon fibre, a glass fibre, ceramic fibre or basalt fibre, wherein, optionally, the textile reinforcing cloth is a textile cloth which is recycled by means of pyrolysis of an article made of a crosslinked composite material;

and wherein the impregnation step of the plurality of reinforcing fibres is as follows:

- impregnating the reinforcing cloth with the molten crosslinkable composition, placing the molten crosslinkable composition in direct contact with, respectively, the carbon, the glass, the basalt of the textile reinforcing cloth, obtaining an impregnated reinforcing cloth.

**15.** An article made of a crosslinked composite material: which is obtainable by crosslinking at least a crosslinkable prepreg composite laminate panel according to claim 11 or 12; which comprises a reinforcing element constituted by a plurality of reinforcing fibres; and an epoxy-polyester hybrid crosslinked composition according to any one of claims 7 or 8, wherein the epoxy-polyester hybrid crosslinked composition is arranged solidly constrained and contiguous to the reinforcing element and impregnates the plurality of reinforcing fibres.

**16.** The article made of a crosslinked composite material according to the preceding claim, obtainable by crosslinking of a plurality of second crosslinkable prepreg composite laminate panels according to claim 11 or 12, wherein the crosslinkable prepreg composite laminate panels (7) of the crosslinkable prepreg composite laminate panels are stacked, one in direct contact with the subsequent one.

**17.** A production method of a composite object: which is made of a crosslinked composite material; and which has an empty hollow body, wherein the production method comprising following steps:

- predisposing an article (1) made of a crosslinked composite material according to any one of claims from 15 to 16, conformed as a first half-shell having a first perimeter edge;
- predisposing a further article (1) made of a crosslinked composite material according to claims from 15 to 16, conformed as a second half-shell and having a second perimeter edge;
- arranging, between the entire first perimeter edge and the entire second perimeter edge, a welding device (9) made of a crosslinkable pre-preg composite material in turn comprising: a reinforcing element comprising a plurality of carbon fibres, wherein at least a part of the carbon fibres (10) of the plurality of carbon fibres is arranged along a relative direction which goes from a first longitudinal end to a second longitudinal end of the reinforcing element; and a crosslinkable composition (11), which is solidly constrained to and which impregnates the reinforcing element, and which forms a first crosslinkable layer on a first side of the reinforcing element and a second crosslinkable layer on a second side of the reinforcing element opposite the first side of the reinforcing element, wherein the crosslinkable composition is selected from a group consisting of: an epoxy-polyester hybrid crosslinkable composition according to any one of claims 3-5, and an additivated epoxy-polyester hybrid crosslinkable composition according to claim 6, wherein the crosslinkable composition has a crosslinking temperature and wherein the crosslinkable layer (11) is arranged about, and in contact with, the reinforcing element, and extends, at least partially, along the direction, leaving uncovered the first end and the second longitudinal end of the reinforcing element; a first electrical connector and a second electrical connector,

electrically connected, respectively, to the first longitudinal end and second longitudinal end of the reinforcing element, arranging the first and second electrical connector externally of the first perimeter edge and the second perimeter edge, and, optionally, inserting at least a floating element between the article (1) made of a crosslinked composite material and the further article (2) made of a crosslinked composite material;
- passing an electrical current between the first electrical connector and the second electrical connector for heating the reinforcing element made of carbon fibre of the at least a welding device (9) to a crosslinking temperature equal to or higher than the crosslinking temperature of the crosslinkable composition of the crosslinkable layer (11), and comprised between 130°C and 250°C welding the first perimeter edge to the second perimeter edge and obtaining the composite object.

**18.** The production method according to the preceding claim, wherein the predisposing step of the first and/or the second article (1) made of a crosslinked composite material and/or of the further article (1) made of a crosslinked composite material comprises following substeps:

- predisposing: a bottom die (3), which is heatable and which has an operative surface; and a top die (4) which is heatable;
- arranging, in the bottom die (3), at least a first crosslinkable prepreg composite laminate panel (7) according to claim 11 or 12, in such a way that the at least a first crosslinkable prepreg composite laminate panel covers the entire operative surface of the bottom die, wherein the first crosslinkable prepreg composite laminate panel is crosslinkable at a crosslinking temperature;
- arranging, on the at least a first crosslinkable prepreg composite laminate panel (7), at predetermined portions of the operative surface of the bottom die, a plurality of second crosslinkable prepreg composite laminate panels according to claim 11 or 12, wherein the plurality of second crosslinkable prepreg composite laminate panels is crosslinkable at the crosslinking temperature; wherein the plurality of reinforcing fibres of each second crosslinkable prepreg composite laminate panel of the plurality of second crosslinkable prepreg composite laminate panels: is constituted by a textile having a primary direction; wherein, optionally, the primary directions of the textiles of the plurality of second composite laminate panels are arranged inclined or perpendicular to one another, optionally, arranging, on the plurality of second crosslinkable prepreg composite laminate panels a nautical track box (12) made of a thermoplastic material which is resistant to the crosslinking temperature of the at least a first crosslinkable prepreg composite laminate panel; and, optionally, arranging, on the plurality of second crosslinkable prepreg composite laminate panels, a protective polymeric film made of a material able to resist ultraviolet radiations and comprising a polymeric material selected from polyethylene terephthalate (PET), polycarbonate, elastomeric polyester, heat-hardening polyester, polypropylene, polyethylene, and copolyamide;
- superposing the top die (4) on the bottom die (3);
- crosslinking, by heating the bottom die (3) and the top die (4), the at least a first crosslinkable prepreg composite laminate panel and the plurality of second crosslinkable prepreg composite laminate panels to a temperature equal to or greater than the crosslinking temperature, obtaining an article (1) made of a crosslinked composite material and/or the further article (1) made of a crosslinked composite material comprising: un first crosslinked prepreg composite laminate panel; and a plurality of crosslinked prepreg composite laminate panels deriving from the plurality of second crosslinkable prepreg composite laminate panels and which is solidly constrained to the first crosslinked prepreg composite laminate panel.

**19.** An object having an empty hollow body, made of a crosslinked composite material and comprising:

- a first half-shell and a second half-shell, both made of a first crosslinked composite material comprising a plurality of reinforcing fibres and an epoxy-polyester hybrid crosslinked composition according to claim 5 or 6 which impregnates the plurality of reinforcing fibres, wherein the first half-shell and the second half-shell have, respectively, a first perimeter edge and a second perimeter edge which are mutually entirely superposable;
- a welding portion which is interposed between the first perimeter edge and the second perimeter edge and which is solidly constrained to the entire first perimeter edge and to the entire second perimeter edge and which is made of a second crosslinked composite material constituted by a reinforcing element made of carbon fibre and by an epoxy-polyester hybrid crosslinked composition according to claim 6 or 7.

**20.** A recycling method of an article made of a composite material, comprising following steps:

- predisposing an article (1) made of a composite material according to claim 15 or 16, having a first conformation;
- heating the article made of a composite material to a temperature that is higher than the single glass transition temperature (TG), measured using differential scanning calorimetry according to standard ISO 1356, of the

epoxy-polyester hybrid crosslinked composition comprised in the article (1) made of a crosslinked composite material, obtaining an article (1) made of a heated crosslinked composite material; and
- newly thermoforming at least a portion of the article (1) made of a heated crosslinked composite material obtained in the preceding step, obtaining the further article (1) made of a composite material having a second conformation, different to the first configuration.

**21.** The recycling method of an article made of a composite material comprising a following step:

- grinding an article (1) made of a crosslinked composite material according to any one of preceding claims 15 or 16, obtaining a plurality of granules;
- mixing the plurality of granules with a first molten thermoplastic composition, obtaining a thermoformable mixture;
- thermoforming the thermoformable mixture obtaining a further article (1) made of a crosslinked composite material made of the thermoformable mixture.

**22.** A recycling method of an article made of a crosslinked composite material, comprising a following step:

- dissolving an article (1) made of a crosslinked composite material according to any one of claims from 15 to 16, or parts thereof, in a bath of polyethylene glycol (PEG) heated to about 195°C and in the presence of depolymerisation catalysts obtaining a biphasic mixture constituted by: a solid component and a liquid component which comprises, in turn, monomers and oligomers, which have a number of monomers comprised between 1 and 10, measurable using gel permeation chromatography;
- separating, from the biphasic mixture, the liquid component from the solid component;
- subjecting the liquid component separated during the preceding step, to a fractional solidification process, in order to separate the monomers from the polymers.

**23.** The production method of an article made of a crosslinked composite material, wherein the article made of a crosslinked composite material is according to claims 15 or 16, wherein the production method comprises following steps:

- predisposing a die: which is a die for injection moulding; which is predisposed for injection moulding of a thermoplastic material; and which comprises a concave inner wall;
- inserting a crosslinkable prepreg composite laminate panel according to claim 11 or 12 into the die, with the crosslinked laminate panel at least partially in contact with the concave inner wall of the die;
- injecting, into the die, while the third crosslinkable prepreg composite laminate panel is crosslinking, a preselected thermoplastic material, which is selected from among polyethylene terephthalate (PET), polybutylene terephthalate (PBT), polycarbonate (PC), polypropylene (PP), polyethylene (PE), elastomeric polyesters (COPE), copolymers of the polyamide (CoPA), obtaining an article made of a crosslinked composite material which comprises:

a crosslinked prepreg composite laminate panel (7), which derives from the crosslinking of the crosslinkable prepreg composite laminate panel in the die and which forms a housing;
and a first complementary element made of the preselected thermoplastic material: which is solidly constrained to and in direct contact with, at the first housing, with the crosslinked prepreg composite laminate panel (7); and which is partially projecting from the housing.

**24.** The production method of an article made of a crosslinked composite material, wherein the article made of a crosslinked composite material is according to claims 15 or 16, wherein the production method comprises following steps:

- predisposing a further die which is a die for injection moulding; which is predisposed for injection moulding of a thermoplastic material; and which comprises a concave inner wall;
- arranging above a crosslinkable prepreg composite laminate panel according to claim 11 or 12 and in contact therewith, a sheet made of a preselected thermoplastic material, which is selected from among: polyethylene terephthalate (PET), polybutylene terephthalate (PBT), polycarbonate (PC), polypropylene (PP), polyethylene (PE), elastomeric polyesters (COPE), copolymers of the polyamide (CoPA), and polyethylene additivated with acrylic, obtaining a multi-layer crosslinkable structure comprising the crosslinkable prepreg composite laminate panel and the sheet;

optionally, crosslinking the multi-layer crosslinkable structure obtaining a multi-layer crosslinked structure which comprises: a crosslinked prepreg composite laminate panel (7) which derives from the crosslinking of the crosslinkable prepreg composite laminate panel; and a layer which is made of the preselected thermoplastic material, and which is solidly constrained to and in direct contact with the crosslinked prepreg composite laminate panel (7),

- inserting, in the die for injection moulding, an element which, when the preceding step of crosslinking is omitted, consists of the multi-layer crosslinkable structure, with the sheet in contact with the concave inner wall of the further die; and which, when the preceding step of crosslinking is included, consists of the multi-layer crosslinked structure, with the layer with the concave inner wall of the further die;
- injecting, into the die, the preselected thermoplastic material of the sheet in the molten state, by crosslinking, when present, the multi-layer crosslinkable structure, crosslinking it, and obtaining an article made of a crosslinked composite material comprising: a crosslinked prepreg composite laminate panel (7) which forms a housing; a complementary element made of the preselected thermoplastic material: which is solidly constrained to and in direct contact with, at the first housing, with the crosslinked prepreg composite laminate panel (7)which is partially projecting from the housing; and a distal layer made of the preselected thermoplastic material which is fixed to the crosslinked prepreg composite laminate panel (7) on an opposite side with respect to the complementary element.

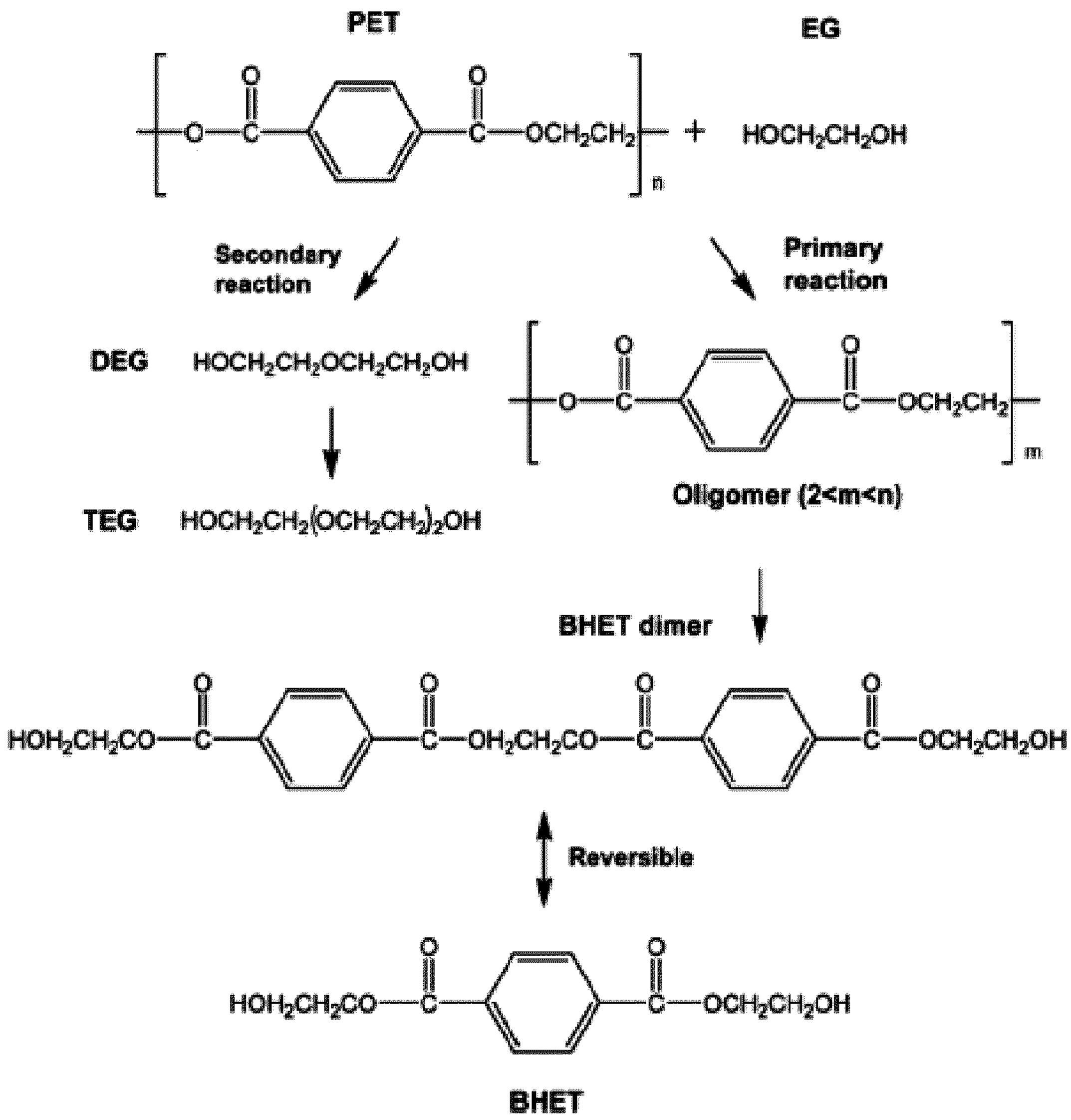


Fig. 1

Linear Trimer

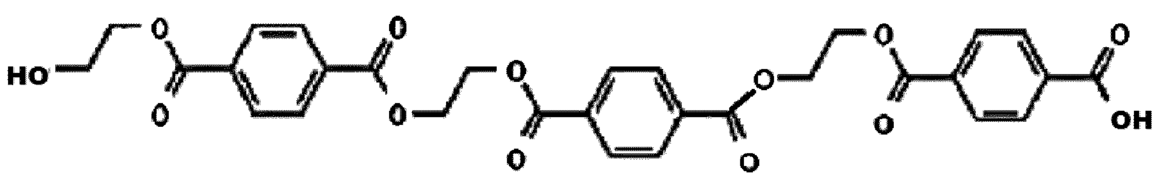

Fig. 2

| | first % of at least crosslinking activation catalyst | Second % of group of crosslinkable components | third % of the least an epoxy resin | fourth % of at least a carboxylated polyester resin | fifth % of the at least a carboxylated polyester resin | sixth % of the least an unsaturated carboxylated polyester resin | Seventh % of at least a monomeric and/or oligomeric reactant | % of the first mixture | % of the second mixture |
|---|---|---|---|---|---|---|---|---|---|
| Comp, 1 | 1 | 99 | 75 | 4 | 4 | 0 | 20 | 0 | 20 |
| Comp, 2 | 2 | 98 | 73 | 5 | 5 | 0 | 20 | 0 | 20 |
| Comp, 3 | 2 | 98 | 73 | 5 | 5 | 0 | 20 | 20 | 0 |
| Comp, 4 | 1 | 99 | 84 | 5 | 5 | 0 | 10 | 10 | 0 |
| Comp, 5 | 3 | 97 | 72 | 5 | 5 | 0 | 20 | 20 | 0 |
| Comp, 6 | 2,5 | 97,5 | 73 | 5 | 5 | 0 | 20 | 20 | 0 |
| Comp, 7 | 2 | 98 | 68 | 10 | 10 | 0 | 20 | 20 | 0 |
| Comp, 8 | 2,5 | 97,5 | 71 | 7 | 2 | 5 | 20 | 20 | 0 |
| Comp, 9 | 2 | 98 | 66 | 12 | 2 | 10 | 20 | 20 | 0 |
| Comp, 10 | 2 | 98 | 66 | 2 | 2 | 0 | 30 | 30 | 0 |
| Comp, 11 | 2 | 98 | 66 | 2 | 2 | 0 | 30 | 0 | 30 |
| Comp, 12 | 1 | 99 | 51 | 28 | 28 | 0 | 20 | 20 | 0 |
| Comp, 13 | 1 | 99 | 51 | 28 | 20 | 8 | 20 | 20 | 0 |
| Comp, 14 | 1 | 99 | 54 | 28 | 15 | 13 | 17 | 17 | 0 |
| Comp, 15 | 1 | 99 | 50 | 29 | 10 | 19 | 20 | 0 | 20 |
| Comp, 16 | 2 | 98 | 63 | 5 | 5 | 0 | 30 | 0 | 30 |
| Comp, 17 | 2 | 98 | 63 | 10 | 5 | 5 | 25 | 10 | 15 |
| Comp, 18 | 2,5 | 97,5 | 73 | 5 | 5 | 0 | 20 | 10 | 10 |
| Comp, 19 | 3 | 97 | 82 | 5 | 5 | 0 | 10 | 5 | 5 |
| Comp, 20 | 2 | 98 | 58 | 20 | 10 | 10 | 20 | 10 | 10 |
| Comp, 21 | 1,5 | 98,5 | 59 | 30 | 20 | 10 | 10 | 0 | 10 |
| Comp, 22 | 1 | 99 | 54 | 30 | 10 | 20 | 15 | 5 | 10 |
| Comp, 23 | 1 | 99 | 89 | 5 | 5 | 0 | 5 | 5 | 0 |

FIG. 3

Table 3

Fig.4A

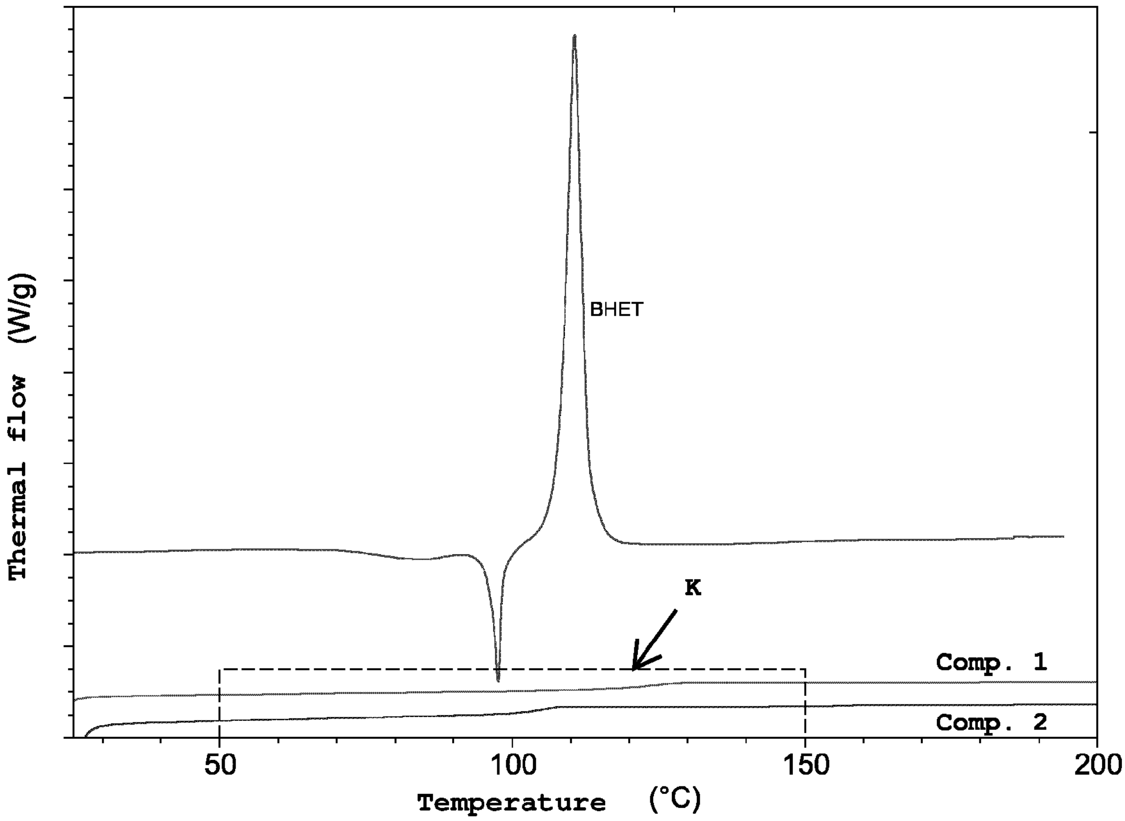
Thermal flow (W/g)
BHET
K
Comp. 1
Comp. 2
50
100
150
200
Temperature (°C)

Fig. 4B

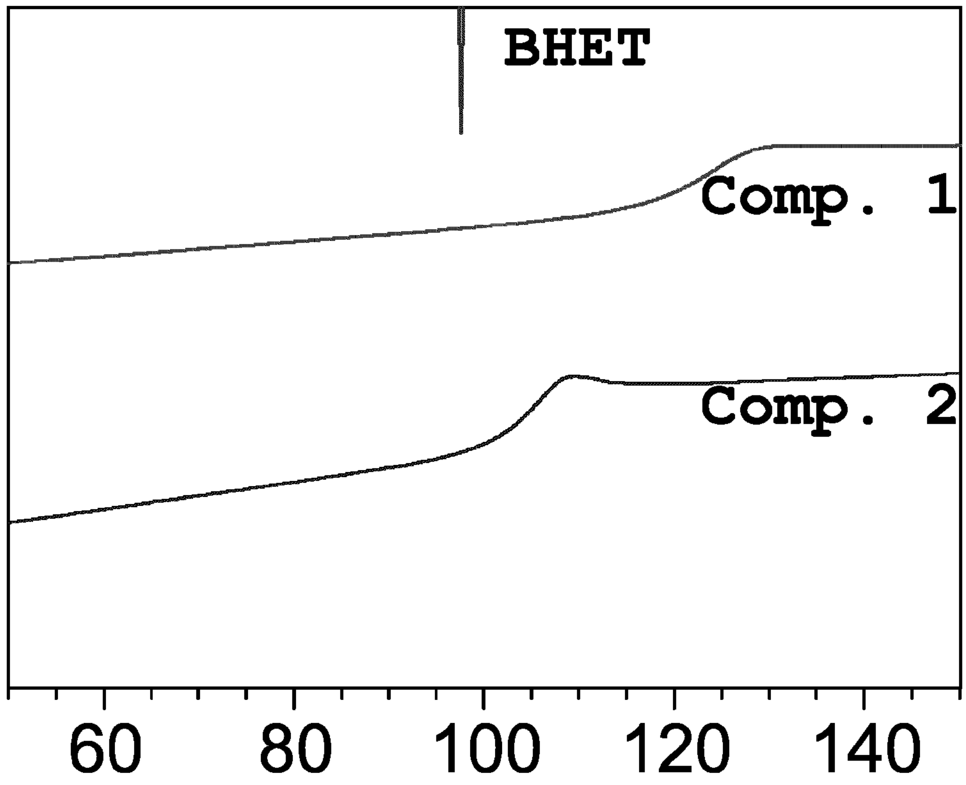
BHET
Comp. 1
Comp. 2
60
80
100
120
140

Fig.5A

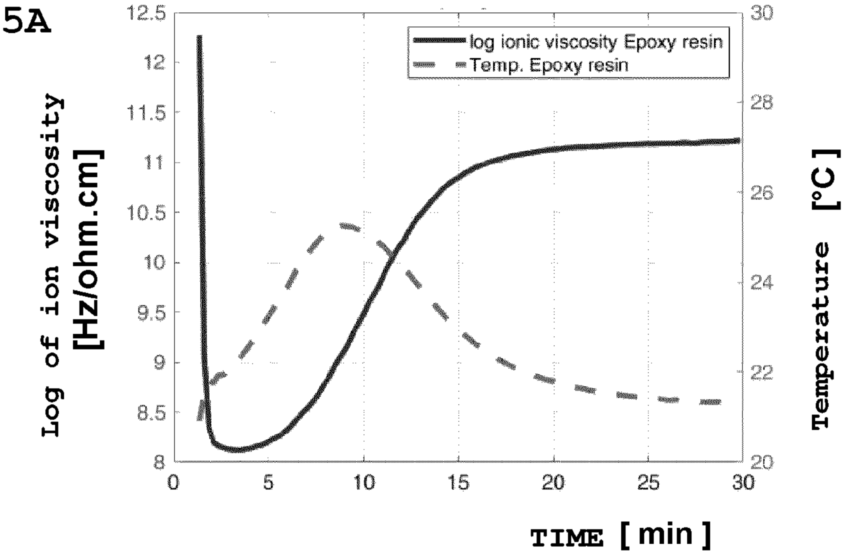


Fig.5B

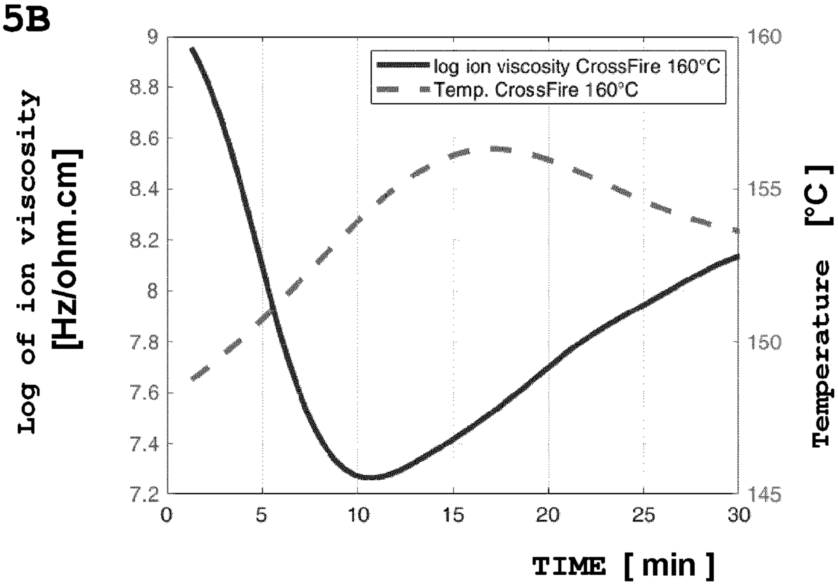


Fig.5C

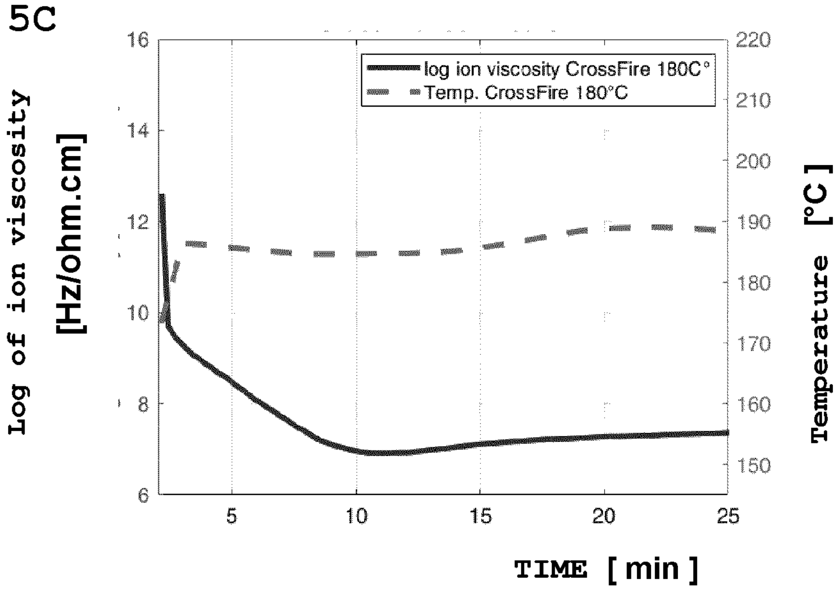

Fig. 6

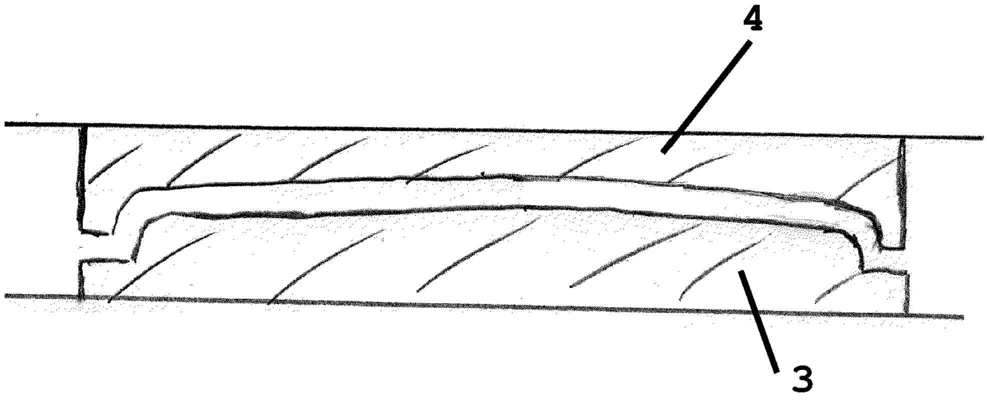


Fig. 7

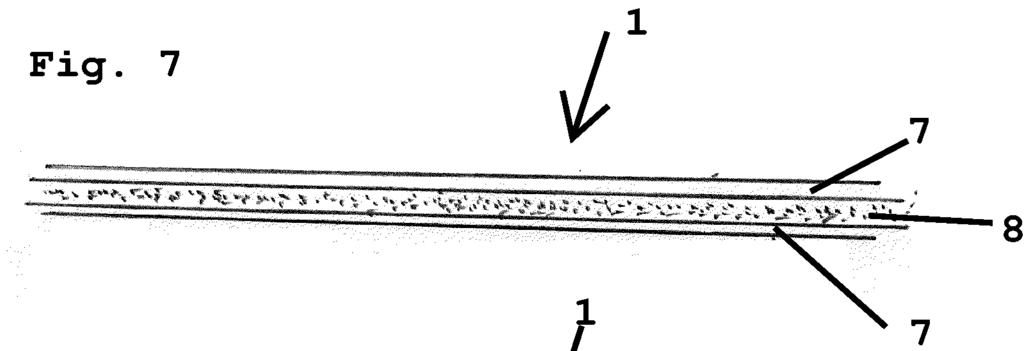


Fig. 8

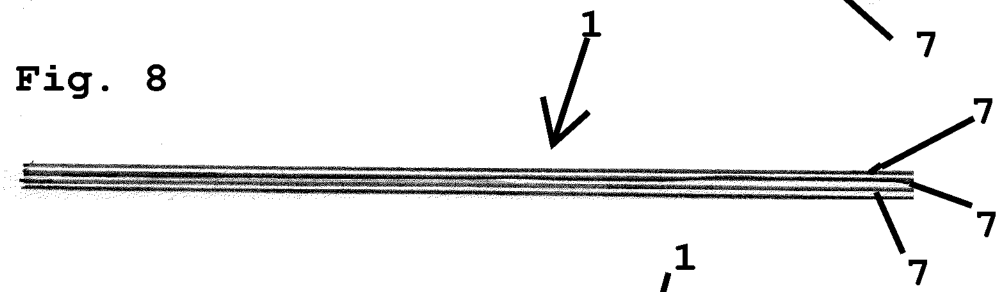


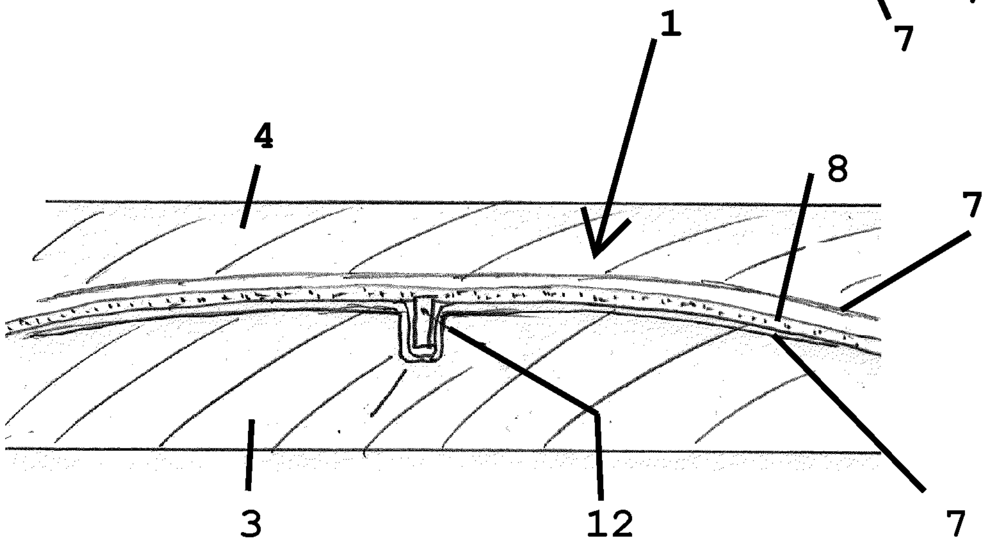


Fig. 9

Fig. 10

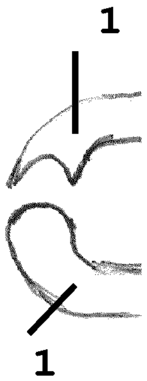


Fig. 11

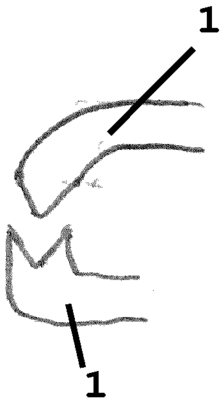


Fig. 12

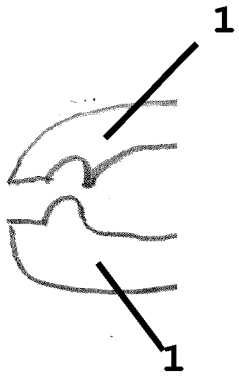


Fig. 13

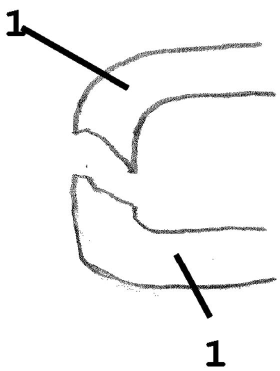


Fig. 14

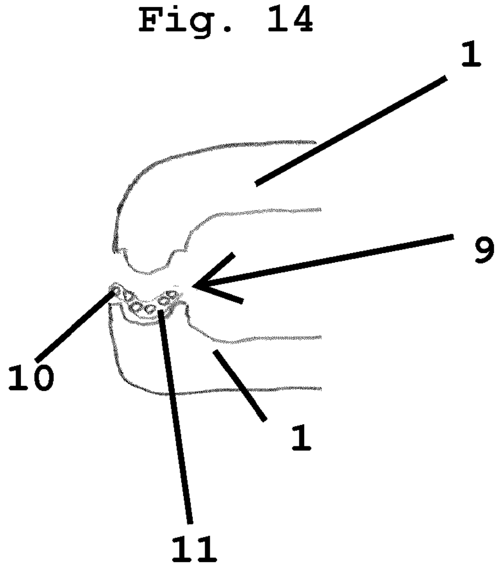


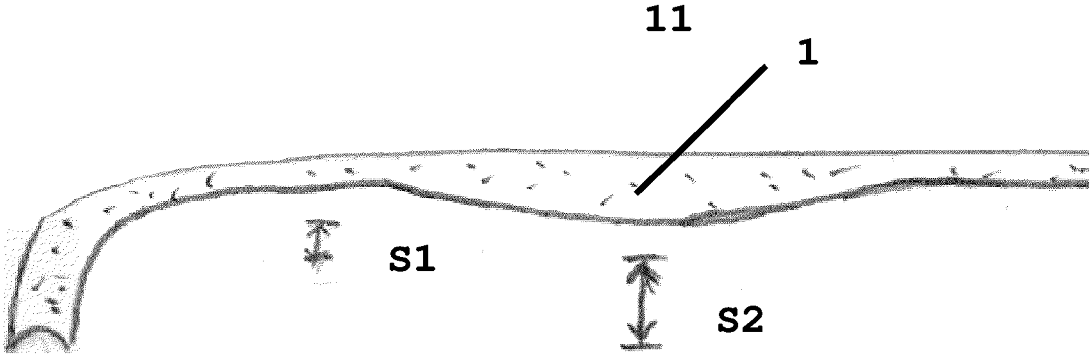


Fig. 15

Europäisches Patentamt
European Patent Office
Office européen des brevets

# EUROPEAN SEARCH REPORT

Application Number
EP 25 18 3048

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WO 2018/031103 A1 (ICL IP AMERICA INC [US]) 15 February 2018 (2018-02-15) * pages 35,36; claim 1; example 9 * ----- | 1-24 | INV. C08G59/42 C08L63/00 |
| A,D | CN 105 968 730 A (BEIJING HONGHU XIONGSHI TECH DEV CO LTD) 28 September 2016 (2016-09-28) * example 3 * ----- | 1-24 | |
| A,D | CN 105 733 193 A (AEROSPACE RES INST MATERIALS & PROC TECHNOLOGY ET AL.) 6 July 2016 (2016-07-06) * claim 1 * ----- | 1-24 | |
| A,D | US 2023/067221 A1 (FRAGIACOMO GUIDO [IT] ET AL) 2 March 2023 (2023-03-02) * claims 1,2 * ----- | 1-24 | |
| | | | TECHNICAL FIELDS SEARCHED (IPC) |
| | | | C09J C08G C08L |

The present search report has been drawn up for all claims

1

| Place of search | Date of completion of the search | Examiner |
|---|---|---|
| The Hague | 22 September 2025 | Goulis, Panagiotis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 18 3048

This annex lists the patent family members relating to the patent documents cited in the above-mentioned European search report. The members are as contained in the European Patent Office EDP file on
The European Patent Office is in no way liable for these particulars which are merely given for the purpose of information.

22-09-2025

| Patent document cited in search report | Publication date | Patent family member(s) | Publication date |
|---|---|---|---|
| WO 2018031103 A1 | 15-02-2018 | TW 201816006 A | 01-05-2018 |
| | | WO 2018031103 A1 | 15-02-2018 |
| CN 105968730 A | 28-09-2016 | NONE | |
| CN 105733193 A | 06-07-2016 | NONE | |
| US 2023067221 A1 | 02-03-2023 | CN 114746391 A | 12-07-2022 |
| | | EP 4077266 A1 | 26-10-2022 |
| | | IT 201900025039 A1 | 20-06-2021 |
| | | JP 7723662 B2 | 14-08-2025 |
| | | JP 2023507275 A | 22-02-2023 |
| | | KR 20220116437 A | 23-08-2022 |
| | | MY 207427 A | 26-02-2025 |
| | | PH 12022551273 A1 | 20-11-2023 |
| | | US 2023067221 A1 | 02-03-2023 |
| | | WO 2021124149 A1 | 24-06-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- WO 2018031103 A
- CN 105968730
- CN 105733193
- US 2023067221 A1
- IT 201900025039 A1

### Non-patent literature cited in the description

- **JEAN LANE**. Practical Steps inGPC MethodDevelopment. *Applications Engineer LC Columns & Consumables Technical Support*, 23 March 2016
- *CHEMICAL ABSTRACTS*, 959-26-2